# EUROPEAN PATENT SPECIFICATION

(11) **EP 4 271 734 B1**
(45) Date of publication and mention of the grant of the patent: **12.08.2026**
(21) Application number: 22734832.3
(22) Date of filing: 04.01.2022
(51) Int. Cl.: C08J 11/10, C10B 53/07, C10J 1/00, C08J 11/12

(54) **METHODS AND SYSTEMS FOR DESTRUCTION OF SYNTHETIC PER- AND POLYFLUORO COMPOUNDS**
VERFAHREN UND SYSTEME ZUR ZERSTÖRUNG SYNTHETISCHER PER- UND POLYFLUORVERBINDUNGEN
PROCÉDÉS ET SYSTÈMES POUR LA DESTRUCTION DE COMPOSÉS SYNTHÉTIQUES PERFLUORÉS ET POLYFLUORÉS

(30) Priority: 04.01.2021 US 202163199507 P
(43) Date of publication of application: 08.11.2023
(73) Proprietor: CHZ Technologies, LLC, Austintown, Ohio 44515 (US)
(72) Inventor: BRANDHORST, Henry, W., Jr., Austintown, Ohio 44515 (US); ENGEL, Ullrich, H., Austintown, Ohio 44515 (US); LUDWIG, Charles, T., Austintown, Ohio 44515 (US); ZAVORAL, Ernest, J., Sr., Austintown, Ohio 44515 (US)
(74) Representative: FRKelly
(86) International application number: PCT/US2022/011106
(87) International publication number: WO 2022/147527

(56) References cited:
- WO-A1-2020/073092
- WO-A1-2020/073092
- JP-A- 2010 063 996
- US-A- 5 531 975
- US-A- 5 531 975
- US-A1- 2018 057 751
- US-A1- 2020 102 504
- US-A1- 2020 102 504
- US-A1- 2020 155 885
- US-A1- 2020 155 885
- US-B2- 10 640 711
- US-B2- 10 640 711
- US-B2- 9 815 225
- FEI WANG ET AL: "Influence of calcium hydroxide on the fate of perfluorooctanesulfonate under thermal conditions", JOURNAL OF HAZARDOUS MATERIALS, ELSEVIER, AMSTERDAM, NL, vol. 192, no. 3, 6 June 2011 (2011-06-06), pages 1067 - 1071, XP028275845, ISSN: 0304-3894, [retrieved on 20110612], DOI: 10.1016/J.JHAZMAT.2011.06.009
- HE DA ET AL: "One-step green fabrication of hierarchically porous hollow carbon nanospheres (HCNSs) from raw biomass: Formation mechanisms and supercapacitor applications", JOURNAL OF COLLOID AND INTERFACE SCIENCE, ACADEMIC PRESS,INC, US, vol. 581, 27 July 2020 (2020-07-27), pages 238 - 250, XP086321631, ISSN: 0021-9797, [retrieved on 20200727], DOI: 10.1016/J.JCIS.2020.07.118

## Description

### FIELD OF THE INVENTION

The invention relates to clean, safe and efficient methods and systems for utilizing thermolysis methods to process various per- and polyfluoroalkyl substances (PFAS) in various waste sources. The methods beneficially convert the waste sources containing PFAS and other halogenated compounds into a Clean Fuel Gas and Char source. The thermolysis methods provide an advanced pyrolysis methodology for heating and converting these waste sources including a multicomponent and multistep, energy-assisted, chemical reaction as disclosed herein.

### BACKGROUND OF THE INVENTION

Various waste sources in need of safe and efficient processing and/or recycling contain high levels of fluorine, often in addition to chlorine and other halogens / halogenated compounds. This presents a significant challenge as these fluorine sources often contain synthetic chemicals that are classified as perfluoroalkyl substances or polyfluoroalkyl substances (PFAS). As referred to herein PFAS can also be referred to as PFOS (which are specifically the water soluble and most difficult to destroy or remove) of the family of perfluoro compounds. PFAS chemicals are known as "forever chemicals" because of their long half-life and remarkable stability. PFAS represents a family of synthetic perfluoro compounds possessing incredible persistence in both the environment and the human body. The carbon-fluorine bond is one of the strongest bonds in organic chemistry (due to the low molecular weight of the fluorine, where the molecular weight is inversely related to the C-halogen bond strength). For example, the C-F bond strength is 115.8 kcal/mole whereas the C-Br bond strength is only 65.9 kcal/mole. As a result, the C-F bond is chemically resistant to a broad range of organic and inorganic solvents, acids, bases, enzymes, biologicals, UV radiation and other approaches used in traditional chemical decomposition.

PFAS are considered to be very stable fluoro compounds and are therefore difficult to decompose. Fluoropolymers like Teflon (polytetrafluoroethylene) manufactured since the 1940s have been widely used in residential and commercial applications. Their "non-stick" characteristics have unparalleled resistance to heat, oils, stains, and cleaning products. This has enabled companies to develop and commercialize over 9000 perfluorinated compounds. These compounds are also used as soil and stain repellants for fabrics, carpet, leather, paints, cardboard, food packaging, fire suppression gasses and foams (AFFF), wiring, plumbing and chemical processing seals, gaskets, coatings, etc. These products end up in landfills and the PFAS eventually leaches into ground water.

An additional example are PFAS surfactant foams (AFFF) that have been broadly used in firefighting especially around airports, military installations, and locations with inventories of highly combustible fuel oils and chemicals. The water-soluble foams are highly eff ective in the high energy fires but seep into ground water and eventually in drinking water sources.

There are myriad additional types of PFAS widely used for more than 60 years in various types of plastics, foams (e.g. fire retardant foams), lubricants, and various other stain-resistant, waterproof, and/or nonstick products. Accordingly there is a massive amount of materials and waste sources that have accumulated and contain PFAS in need of processing and/or recycling. These PFAS-containing materials are in need of clean, safe and efficient methods for process and recycling. This is needed to address various environmental considerations, which are exhibited by PFAS compounds now identified at varying concentrations in waste streams, ground water, soil, and the like.

Attempted processing of PFAS compounds has included several destruction approaches over the years, including chemical and biological disassociation, UV radiation, biological activity, and incineration. High temperature incineration is extremely expensive and often results in incomplete destruction with toxic air dispersion emissions of shorter-chain fluoro-compounds. There is no "silver bullet" available for treatment or complete destruction of PFAS. Accordingly, it is an objective of the methods and systems described herein to solve the problem and need in the art for clean, safe and efficient methods for processing PFAS-containing materials.

A further object of the disclosure is to provide methods and systems for utilizing thermolysis methods to safely and efficiently convert various PFAS-containing materials into a Clean Fuel Gas and Char source without generation (and further the removal of) toxic byproducts. As a result, the methods and systems would meet even the most rigid environmental standards that may be set forth for recycling and/or processing of such waste sources.

**In** particular, the generation of a Clean Fuel Gas provides a desirable waste-to-energy pathway from a previously unutilized waste source through the recycling of tars and oils to generate Clean Fuel Gas to thereby reuse the energy that went into the original fabrication of the PFAS-containing waste sources. In a further application, the generation of the Char source is suitable for further recycling and/or use of the Char source for further separation of desirable components for various applications as disclosed pursuant to the invention.

A further object of the invention is to utilize thermolysis methods to remove all halogen compounds, including fluorine, bromine and chlorine compounds, while beneficially not generating any additional toxic compounds.

A further object of the invention is to utilize thermolysis methods to generate clean, useable fuel gas sources substantially-free or free of halogens (including fluorine, bromine and chlorine) and other halogenated organic compounds (including VOCs).

US2020102504A1 discloses a multistage thermolysis method for safe and efficient conversion of carpet/rug, polymeric materials and other waste sources.

US2020155885A1 discloses hydrothermal technology for decontamination and mineralization of perfluoro- and polyfluoroalkyl substance (PFAS) in wastes, concentrate solutions, and chemical stockpiles by reacting NaOH directly with fluorinated hydrocarbons at a temperature of 350 °C.

WO2020073092A1 discloses a process for processing carbonaceous material, the process comprising: delivering a carbonaceous material to a reactor; delivering a catalyst to the reactor; processing the carbonaceous material at a relatively low temperature within the reactor to decompose the carbonaceous material to base compounds.

Fei Wang et al discloses "Influence of calcium hydroxide on the fate of perfluorooctanesulfonate under thermal conditions" in JOURNAL OF HAZARDOUS MATERIALS, ELSEVIER, AMSTERDAM, NL, vol. 192, no. 3, 6 June 2011, pages 1067 - 1071, DOI: 10.1016/J.JHAZMAT.2011.06.009.

US5531975A discloses a process for the production of phosphoric acid and calcium fluoride. Fluosilicic acid is reacted with phosphate rock in order to produce wet process phosphoric acid and calcium fluoride which is later reacted with sulfuric acid to produce hydrogen fluoride and calcium sulfate.

US2018057751A1 discloses a multistage thermolysis method for safe and efficient conversion of e-waste materials, including chlorinated and brominated compounds.

He Da et al discloses "One-step green fabrication of hierarchically porous hollow carbon nanospheres (HCNSs) from raw biomass: Formation mechanisms and supercapacitor applications" in JOURNAL OF COLLOID AND INTERFACE SCIENCE, ACADEMIC PRESS,INC, US, vol. 581, 27 July 2020, pages 238 - 250, DOI: 10.1016/J.JCIS.2020.07.118. The method entails forming HF from fluorinated compounds. The formed HF is reacted with silica (SiO₂) to form SiF₄ gas which creates pores in the carbon nanospheres.

### BRIEF SUMMARY OF THE INVENTION

Provided is a method for safely processing and/or recycling PFAS (per- and polyfluoroalkyl substances) materials and/or PFAS-containing waste sources comprising:
inputting a PFAS material and/or PFAS-containing waste source into a thermolysis system comprising at least one reactor for a multicomponent and multistep, energy-assisted, chemical reaction to defluorinate PFAS compounds in the PFAS material and/or PFAS-containing waste source;
undergoing a depolymerization and a cracking reaction of hydrocarbons in the waste
source to cleave C-C bonds and C-H bonds in the PFAS materials and/or PFAS-containing waste sources to provide an excess of hydrogen to cleave C-F bonds and destroy and/or remove toxic compounds present in the PFAS materials and/or PFAS-containing waste sources; and
forming HF gas and processing the HF gas through at least one gas/aqueous scrubber to
form a Clean Fuel Gas, wherein the HF gas is neutralized to form fluoride salts; and
generating the fluoride salt, Clean Fuel Gas and Char source that are substantially-free of
PFAS byproducts and halogenated organic compounds and do not include tars and/or oils.

An advantage of the invention is the clean and efficient methods for utilizing a multicomponent, energy-assisted, chemical reaction to safely and efficiently convert PFAS material and/or PFAS-containing waste source to Clean Fuel Gas and Char source. It is a further advantage of the present invention that the waste sources are converted by destroying halogenated compounds and halogens including fluorine and any hazardous byproducts from the PFAS compounds; clean, reusable fuel gas sources substantially-free or free of halogens and other VOCs are generated; and a Char source containing valuable materials are further generated.

In a further aspect, products produced by the described methods for converting PFAS materials and/or PFAS-containing waste source are provided.

While multiple embodiments are disclosed, still other embodiments of the present invention will become apparent to those skilled in the art from the following detailed description, which shows and describes illustrative embodiments of the invention. Accordingly, the drawings and detailed description are to be regarded as illustrative in nature and not restrictive.

### BRIEF DESCRIPTION OF THE DRAWINGS

FIGS. 1A-1B show exemplary process diagrams for the methods of the present invention.
FIG. 2 shows a thermogravimetric analysis (TGA) comparison of processing chlorinated compounds (PVC) to fluorinated compounds (PTFE, Teflon, a common PFAS polymer).
FIGS. 3A-3D show further TGA comparisons of processing halogenated compounds.
FIGS. 4A-4B show exemplary toxic compounds destroyed according to the methods of the invention.

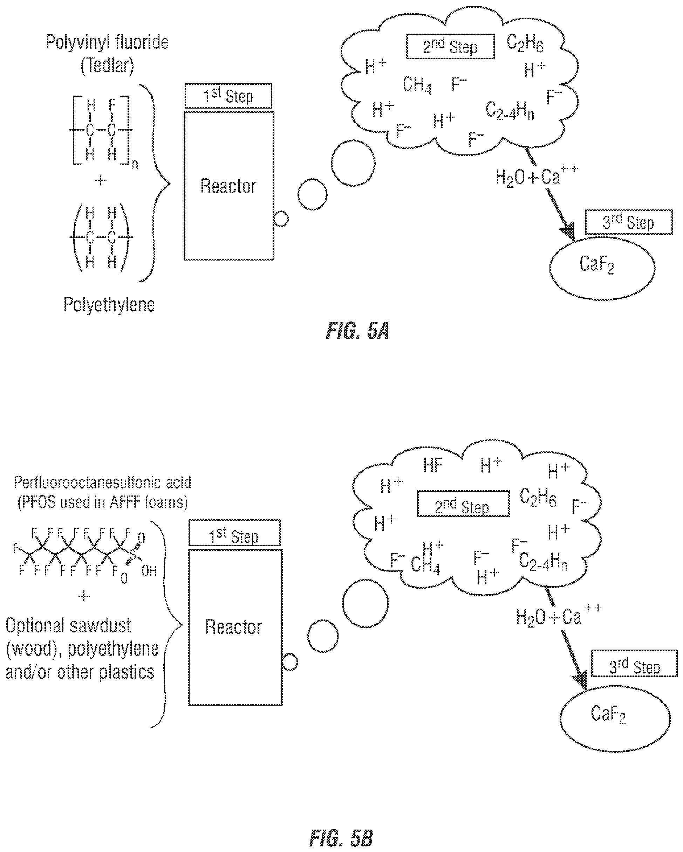

FIGS 5A-5B depicted exemplary processing of PFAS containing waste sources as described herein. FIG. 5A shows processing of Tedlar polymer blended with a saturated olefin polymer to provide excess hydrogen to combine with the reactive fluorine atoms and then form non-toxic mineralized salts in the aqueous gas scrubber. FIG. 5B shows processing of an AFFF foam as a liquid formulation combined with sawdust or wood chips to reduce fluorine concentration and processing to enable the PFOS fluorine atoms to react with the hydrogen and then the resulting gas mixture processed through the scrubbers to form non-toxic mineralized fluoride salts and destroy the AFFF/PFOS.

Various embodiments of the present invention are described in detail with reference to the drawings, wherein like reference numerals represent like parts throughout the several views.

### DETAILED DESCRIPTION OF THE PREFERRED EMBODIMENT

The term "substantially-free," as used herein may refer to a minimal amount of a non-desirable and/or toxic component in a material, such as a fluorinated salts, clean fuel gas and Char generated by the methods, processes of the invention. In an aspect, a material is substantially-free of a defined component if it contains less than a detectable amount of the defined component, or less than about 10 parts per billion (ppb), or more preferably less than about 1 ppb. In an embodiment, fluorinated salts, Char and fuel gas generated according to the processing of PFAS material and PFAS-containing waste is substantially-free of toxins, including halogens, having less than about the detection limit of about 10 ppb, or more preferably less than about 1 ppb of the toxin, including halogens. For toxic and/or hazardous materials, free represents an amount below the detection limit of the appropriate material within experimental error. In an aspect of the invention the fluorinated salts, Char source and fuel gas source generated according to the processing of PFAS material and PFAS-containing waste are free of toxins, indicating that there is a non-detectable amount of toxins in the measured source.

The term "substantially-free," as used herein referring to oxygen in the thermolysis methods refers to a minimal amount of oxygen or air. In an aspect, a system is substantially-free of oxygen if it contains less than about 4 wt.-%, and preferably less than about 2 wt.-%.

The term "thermolysis" as used herein is generally referred to as a thermal-chemical decomposition conversion process employing heat to an input source in need of conversion to a Clean Fuel Gas and Char source. Thermolysis refers generally to thermal-chemical decomposition of organic materials at temperatures >300°C and in some instances in the absence of external oxygen to form gases, tars, and oils and Chars that can be used as chemical feedstocks or fuels. Tars and oils represent groups of volatile organic compounds, viscous liquids, paraffins, waxes, aromatics, aliphatics, fats and other petrochemical based organic mixtures for example. The thermolysis methods disclosed according to the present invention are an advancement over conventional pyrolysis and/or thermolysis methods, which employ fire or a heat source and include an oil as an output. As described herein no oil is generated as an output of the thermolysis methods of the present invention. As disclosed in further detail herein, the present thermolysis methods employ at least a reprocessing of any tars and oils. Based on at least these distinctions between the thermal conversion methods, the terms thermolysis and pyrolysis are not synonymous, as thermolysis provides various beneficial improvements not previously achieved by pyrolysis methods and/or conventional thermolysis methods.

The term "weight percent," "wt.-%," "percent by weight," "% by weight," and variations thereof, as used herein, refer to the concentration of a substance as the weight of that substance divided by the total weight of the composition and multiplied by 100. It is understood that, as used here, "percent," "%," and the like are intended to be synonymous with "weight percent," "wt.-%," etc.

The methods of the present invention may comprise, consist essentially of, or consist of the components and ingredients of the present invention as well as other ingredients described herein. As used herein, "consisting essentially of" means that the methods may include additional steps, components or ingredients, but only if the additional steps, components or ingredients do not materially alter the basic and novel characteristics of the claimed methods.

It should also be noted that, as used in this specification and the appended claims, the term "configured" describes a system, apparatus, or other structure that is constructed or configured to perform a particular task or adopt a particular configuration. The term "configured" can be used interchangeably with other similar phrases such as arranged and configured, constructed and arranged, adapted and configured, adapted, constructed, manufactured and arranged, and the like.

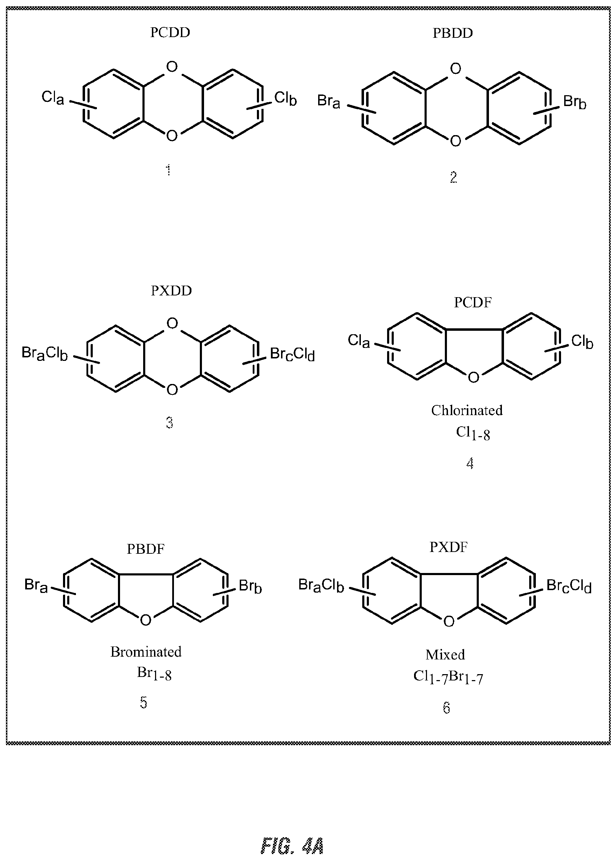

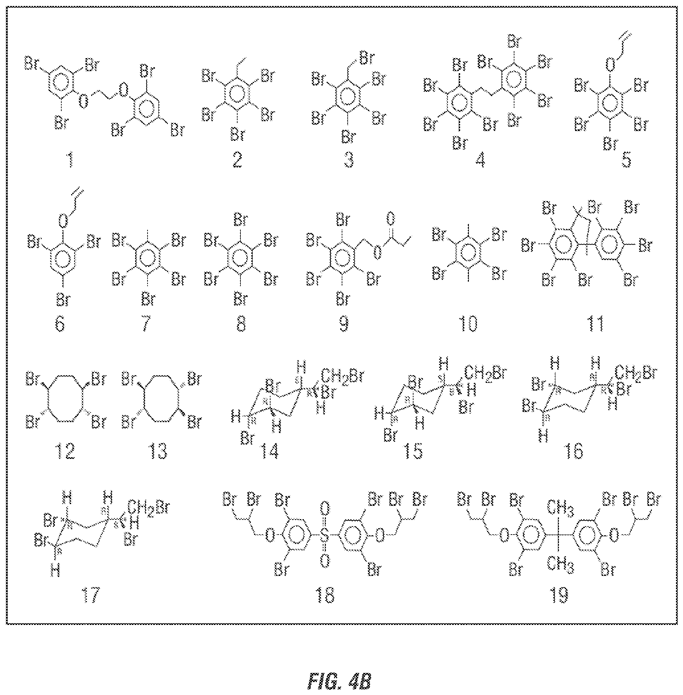

The methods of the present invention relate to thermolysis methods, namely a multicomponent and multistep, energy-assisted, chemical reaction, to safely and efficiently convert various PFAS materials and/or PFAS-containing waste sources to a Clean Fuel Gas and Char source. Beneficially, the methods provide significant and unexpected advances beyond conventional thermolysis methods, as well as conventional incineration or pyrolysis methods. For example, conventional combustion processes which burn waste sources are highly unpredictable and difficult to control. Although advancements in thermolysis have been made in the prior art, the present invention beneficially exceeds the capabilities of known thermolysis methods in converting PFAS materials and/or PFAS-containing waste sources into valuable outputs which beneficially destroy (and do not generate any new) toxic PFAS byproducts, halogens and halogenated organic compounds present in the waste sources, in particular fluorine, such as those depicted in FIG. 4A (halogenated dioxins and furans), FIG. 4B (halogenated flame retardants), along with other halogenated compounds such as brominated flame retardants (e.g. reactive: TBBPA, TBPTA; additive: PBDPE, HBCD, ZnBr, Br-PS; and Br-Dioxins/furans, Br-hydrocarbons); chlorinated flame retardants (e.g. Cl-dioxins/furans, chlorowax, PCB, TCPTA); and other toxic compounds (pentachlorophenol, creosote (PAH), CCA, PVC/PVDC polymers, Sulfur, H₂S).

Moreover, the thermolysis methods of the invention include the use of multiple reactors, reinjection and cracking of any and all tars and oils that are created. As a further benefit, the methods generate clean, useable fuel gas sources substantially-free or free of halogenated organic compounds. As a still further benefit, Char is generated along with the fluorinated salts. Notably, the methods of the present invention do not simply reduce the amounts of fluorinated (and other halogenated compounds) and other toxins, instead these are removed as salts (with no additional generation) from the treated waste sources while further providing the useful and valuable outputs of the invention defined further herein.

### PFAS Materials and PFAS-Containing Waste Sources

The methods described herein relate to novel processes using thermolysis methods too safely and efficiently convert PFAS materials and PFAS-containing waste sources into Clean Fuel sources and Char sources. PFAS compounds have a very strong carbon-fluorine chemical bond that is challenging to safely break and thereafter destroy the fluorine compound without generating hazardous gases or other harmful byproducts, making their complete destruction difficult.

Exemplary PFAS compounds include, for example, poly vinyl fluoride (PVF, C₂H₃F)n) and poly vinylidene fluorine (PVF/PVDF). PVF is available under the tradename Kynar and is commonly used to coat chemical pipes, tanks, and the like to provide extreme chemical resistance. Additional listing of PFAS compounds are shown in Table 1.

**TABLE 1**

| **NAME** | **CASRN** | **MOLECULAR FORMULA** |
|---|---|---|
| 2H-Perfluoro-2-propanol | 920-66-1 | C₃H₂F₆O |
| Perfluorooctanesulfonyl fluoride | 307-35-7 | C₈F₁₈O₂S |
| N-Ethyl-N-(2-hydroxyethyl)perfluorooctanesulfonamide | 1691-99-2 | C₁₂H₁₀F₁₇NO₃S |
| N-Methyl-N-(2-hydroxyethyl)perfluorooctanesulfonamide | 24448-09-7 | C₁₁H₈F₁₇NO₃S |
| 8:2 Fluorotelomer alcohol | 678-39-7 | C₁₀H₅F₁₇O |
| Perfluorobutanesulfonic acid | 375-73-5 | C₄HF₉O₃S |
| Perfluorodecanoic acid | 335-76-2 | C₁₀HF₁₉O₂ |
| Perfluorohexanoic acid | 307-24-4 | C₆HF₁₁O₂ |
| Perfluorononanoic acid | 375-95-1 | C₉HF₁₇O₂ |
| Perfluorooctanesulfonic acid | 1763-23-1 | C₈HF₁₇O₃S |
| Perfluorooctanoic acid | 335-67-1 | C₈HF₁₅O₂ |
| Hexaflumuron | 86479-06-3 | C₁₆H₈Cₗ₂F₆N₂O₃ |
| N-Ethylperfluorooctanesulfonamide | 4151-50-2 | C₁₀H₆F₁₇NO₂S |
| Perfluoro-1,3-dimethylcyclohexane | 335-27-3 | C₈F₁₆ |
| Perfluoroheptanoic acid | 375-85-9 | C₇HF₁₃O₂ |
| Potassium perfluorooctanesulfonate | 2795-39-3 | C₈F₁₇KO₃S |
| Potassium perfluorobutanesulfonate | 29420-49-3 | C₄F₉KO₃S |
| Ammonium perfluorooctanoate | 3825-26-1 | C₈H₄F₁₅NO₂ |
| Potassium perfluorohexanesulfonate | 3871-99-6 | C₆F₁₃KO₃S |
| Perfluorooctanesulfonamide | 754-91-6 | C₈H₂F₁₇NO₂S |
| Perfluorohexanesulfonic acid | 355-46-4 | C₆HF₁₃O₃S |
| Trifluoroacetic acid | 76-05-1 | C₂HF₃O₂ |
| Perfluoroisobutyl methyl ether | 163702-08-7 | C₅H₃F₉O |
| Trifluoromethanesulfonic acid | 1493-13-6 | CHF₃O₃S |
| 6:2 Fluorotelomer alcohol | 647-42-7 | C₈H₅F₁₃O |
| Perfluoro(4-methyl-3,6-dioxaoct-7-ene)sulfonyl fluoride | 16090-14-5 | C₇F₁₄O₄S |
| Hexafluoropropene oxide trimer | 2641-34-1 | C₉F₁₈O₃ |
| Methyl perfluoro(3-(1-ethenyloxypropan-2-yloxy)propanoate) | 63863-43-4 | C₉H₃F₁₃O₄ |
| Flurothyl | 333-36-8 | C₄H₄F₆O |
| Sevoflurane | 28523-86-6 | C₄H₃F₇O |
| Perfluoroundecanoic acid | 2058-94-8 | C₁₁HF₂₁O₂ |
| 6:2 Fluorotelomer methacrylate | 2144-53-8 | C₁₂H₉F₁₃O₂ |
| Perfluoro-1-iodohexane | 355-43-1 | C₆F₁₃I |
| 3,3,4,4,5,5,6,6,6-Nonafluorohexene | 19430-93-4 | C₆H₃F₉ |
| Nonafluoro-1-iodobutane | 423-39-2 | C₄F₉I |
| Perfluorooctanesulfonamido ammonium iodide | 1652-63-7 | C₁₄H₁₆F₁₇IN₂O₂S |
| Perfluoro-3-(1H-perfluoroethoxy)propane | 3330-15-2 | C₅HF₁₁O |
| 7:1 Fluorotelomer alcohol | 307-30-2 | C₈H₃F₁₅O |
| Perfluorooctane | 307-34-6 | C₈F₁₈ |
| 1H,1H,11H-Eicosafluoro-1-undecanol | 307-70-0 | C₁₁H₄F₂₀O |
| 1H,1H-Perfluorooctyl acrylate | 307-98-2 | C₁₁H₅F₁₅O₂ |
| 1 -Iodopentadecafluoroheptane | 335-58-0 | C₇F₁₅I |
| Perfluorooctanoyl fluoride | 335-66-0 | C₈F₁₆O |
| 1H,1H,7H-Dodecafluoro-1-heptanol | 335-99-9 | C₇H₄F₁₂O |
| Octafluoroadipic acid | 336-08-3 | C₆H₂F₈O₄ |
| Perfluamine | 338-83-0 | C₉F₂₁N |
| (Perfluoroethyl)methyl iodide | 354-69-8 | C₃H₂F₅I |
| Pentafluoropropionamide | 354-76-7 | C₃H₂F₅NO |
| Perfluoromethylcyclohexane | 355-02-2 | C₇F₁₄ |
| 1H,1H,5H-Perfluoropentanol | 355-80-6 | C₃H₄F₈O |
| Heptafluorobutyryl methyl ester | 356-24-1 | C₅H₃F₇O₂ |
| Ethyl heptafluorobutyrate | 356-27-4 | C₆H₅F₇O₂ |
| 1H,1H-Perfluoropropyl acrylate | 356-86-5 | C₆H₅F₅O₂ |
| Heptafluorobutyl iodide | 374-98-1 | C₄H₂F₇I |
| 1H,1H-Heptafluorobutanol | 375-01-9 | C₄H₃F₇O |
| Heptafluorobutyryl Chloride | 375-16-6 | C₄ClF₇O |
| Perfluorobutanoic acid | 375-22-4 | C₄HF₇O₂ |
| 1-Bromopentadecafluoroheptane | 375-88-2 | C₇BrF₁₅ |
| Perfluoroheptanesulfonic acid | 375-92-8 | C₇HF₁₅O₃S |
| Perfluorotetradecanoic acid | 376-06-7 | C₁₄HF₂₇O₂ |
| 1H,1H,9H-Hexadecafluoro-1-nonanol | 376-18-1 | C₉H₄F₁₆O |
| Methyl perfluorooctanoate | 376-27-2 | C₉H₃F₁₅O₂ |
| Hexafluoroglutaric acid | 376-73-8 | C₅H₂F₆O₄ |
| Hexafluoroamylene glycol | 376-90-9 | C₅H₆F₆O₂ |
| Tetrafluorosuccinic acid | 377-38-8 | C₄H₂F₄O₄ |
| Methyl pentafluoropropionate | 378-75-6 | C₄H₃F₅O₂ |
| Perfluoro(N-methylmorpholine) | 382-28-5 | C₅F₁₁NO |
| 2:1 Fluorotelomer alcohol | 422-05-9 | C₃H₃F₅O |
| 1H-Perfluoro-1,1-propanediol | 422-63-9 | C₃H₃F₅O₂ |
| Perfluoropropanoic acid | 422-64-0 | C₃HF₅O₂ |
| 1-Bromoheptafluoropropane | 422-85-5 | C₃BrF₇ |
| Perfluorodecyl iodide | 423-62-1 | C₁₀F₂₁I |
| Diethyl perfluoroglutarate | 424-40-8 | C₉H₁₀F₆O₄ |
| 1H,1H-Perfluorobutyl acrylate | 424-64-6 | C₇H₅F₇O₂ |
| Ethyl perfluoropropionate | 426-65-3 | C₅H₅F₅O₂ |
| (Perfluorobutyryl)-2-thenoylmethane | 559-94-4 | C₁₀H₅F₇O₂S |
| 1-Iodoperfluoropentane | 638-79-9 | C₅F₁₁I |
| Heptafluorobutyramide | 662-50-0 | C₄H₂F₇NO |
| Heptafluoro-2-iodopropane | 677-69-0 | C₃F₇I |
| Hexafluoroglutaryl chloride | 678-77-3 | C₅Cₗ₂F₆O₂ |
| 1H,1H,5H,5H-Perfluoro-1,5-pentanediol diacrylate | 678-95-5 | C₁₁H₁₀F₆O₄ |
| N,O-Bis(trifluoroacetyl)hydroxylamine | 684-78-6 | C₄HF₆NO₃ |
| Perfluorosuccinic anhydride | 699-30-9 | C₄F₄O₃ |
| Heptafluoropropyl iodide | 754-34-7 | C₃F₇I |
| Perfluoro(propyl vinyl ether) | 1623-05-8 | C₅F₁₀O |
| 1-Iodo-1H,1H,2H,2H-perfluoroheptane | 1682-31-1 | C₇H₄F₁₁I |
| 11-H-Perfluoroundecanoic acid | 1765-48-6 | C₁₁H₂F₂₀O₂ |
| 1H,1H,2H,2H-Perfluorohexyl methacrylate | 1799-84-4 | C₁₀H₉F₉O₂ |
| Perfluoromethylcyclopentane | 1805-22-7 | C₆F₁₂ |
| 8:2 Fluorotelomer methacrylate | 1996-88-9 | C₁₄H₉F₁₇O₂ |
| 4:2 Fluorotelomer alcohol | 2043-47-2 | C₆H₅F₉O |
| Perfluoropentanoic acid | 2706-90-3 | C₅HF₉O₂ |
| Ethyl perfluorooctanoate | 3108-24-5 | C₁₀H₅F₁₅O₂ |
| 2,2,3,3,4,4,5,5,6,6,7,7,8,8,8-Pentadecafluorooctyl methacrylate | 3934-23-4 | C₁₂H₇F₁₅O₂ |
| 2,2,3,3,4,4,4-Heptafluorobutyl methacrylate | 13695-31-3 | C₈H₇F₇O₂ |
| (Heptafluorobutanoyl)pivaloylmethane | 17587-22-3 | C₁₀H₁₁F₇O₂ |
| 1,4-Dibromo-1,1,2,2-tetrafluorobutane | 18599-20-7 | C₄H₄Br₂F₄ |
| 2-Vinyl(1-bromoperfluoroethane) | 18599-22-9 | C₄H₃BrF₄ |
| 6:2 Fluorotelomer sulfonic acid | 27619-97-2 | C₈H₅F₁₃O₃S |
| 8:2 Fluorotelomer acrylate | 27905-45-9 | C₁₃H₇F₁₇O₂ |
| N-Methylperfluorooctanesulfonamide | 31506-32-8 | C₉H₄F₁₇NO₂S |
| 2:2 Fluorotelomer iodide | 40723-80-6 | C₄H₄F₅I |
| 1H,1H-Perfluoropropyl methacrylate | 45115-53-5 | C₇H₇F₅O₂ |
| Perfluorohexane sulfonamido amine | 50598-28-2 | C₁₁H₁₃F₁₃N₂O₂S |
| 2-(Perfluorobutyl)ethyl acrylate | 52591-27-2 | C₉H₇F₉O₂ |
| 2:2 fluorotelomer alcohol | 54949-74-5 | C₄H₅F₅O |
| Ethyl perfluorobutyl ether | 163702-05-4 | C₆H₅F₉O |
| Perfluorobutyl methyl ether | 163702-07-6 | C₅H₃F₉O |
| Methyl 3,3,3-trifluoro-2-(trifluoromethyl)propionate | 360-54-3 | C₅H₄F₆O₂ |
| Nonafluoro-tert-butanol | 2378-02-1 | C₄HF₉O |
| 2,2,2-Trifluoroethyl triflate | 6226-25-1 | C₃H₂F₆O₃S |
| 1,1,1,3,3-Pentafluorobutane | 406-58-6 | C₄H₅F₅ |
| Difluoromethyl 1H,1H-perfluoropropyl ether | 56860-81-2 | C₄H₃F₇O |
| 1H,1H,2H-Perfluoro-1-decene | 21652-58-4 | C₁₀H₃F₁₇ |
| Decafluorocyclohexene | 355-75-9 | C₆F₁₀ |
| (1H,1H-Perfluoroethyl)(2H-perfluoroethyl)ether | 406-78-0 | C₄H₃F₇O |
| Bis(perfluoroisopropyl)ketone | 813-44-5 | C₇F₁₄O |
| Triethoxy((perfluorohexyl)ethyl)silane | 51851-37-7 | C₁₄H₁₉F₁₃O₃Si |
| Perfluoro-2-methyl-3-pentanone | 756-13-8 | C₆F₁₂O |
| Perfluorodimethylcyclobutane | 28677-00-1 | - |
| 1H,6H-Perfluorohexane | 336-07-2 | C₆H₂F₁₂ |
| 1H,1H,5H-Perfluoropentyl acrylate | 376-84-1 | C₈H₆F₈O₂ |
| 3H,3H-Perfluoro-2-butanone | 400-49-7 | C₄H₂F₆O |
| Perfluorooctanesulfonate | 45298-90-6 | C₈F₁₇O₃S |
| 2-Methoxy-2H-perfluoropropane | 13171-18-1 | C₄H₄F₆O |
| 7H-Perfluoroheptanoic acid | 1546-95-8 | C₇H₂F₁₂O₂ |
| 3,3-Bis(trifluoromethyl)-3-hydroxypropionic acid | 1547-36-0 | C₅H₄F₆O₃ |
| 3,3-Bis(trifluoromethyl)-2-propenoic acid | 1763-28-6 | C₅H₂F₆O₂ |
| 1,6-Divinylperfluorohexane | 1800-91-5 | C₁₀H₆F₁₂ |
| 1H,1H,9H-perfluorononyl methacrylate | 1841-46-9 | C₁₃H₈F₁₆O₂ |
| 3H,3H-Perfluoro-2,4-hexanedione | 20825-07-4 | C₆H₂F₈O₂ |
| 4H,4H-Perfluoro-6,6-dimethylheptane-3,5-dione | 2145-68-8 | C₉H₁₁F₅O₂ |
| (6H-Perfluorohexyl)methyl methacrylate | 2261-99-6 | C₁₁H₈F₁₂O₂ |
| 2-(Perfluorohexyl)ethylphosphonic acid | 252237-40-4 | C₈H₆F₁₃O₃P |
| (Perfluoroheptyl)ethene | 25431-45-2 | C₉H₃F₁₅ |
| (Perfluorocyclohexyl)methanol | 28788-68-3 | C₇H₃F₁₁O |
| (6H-Perfluorohexyl)methyl acrylate | 2993-85-3 | C₁₀H₆F₁₂O₂ |
| Ethyl perfluorononan-1-oate | 30377-52-7 | C₁₁H₅F₁₇O₂ |
| 1H,1H-Perfluorooctylamine | 307-29-9 | C₈H₄F₁₅N |
| Perflubrodec | 307-43-7 | C₁₀BrF₂₁ |
| Perfluorosebacic acid | 307-78-8 | C₁₀H₂F₁₆O₄ |
| Perfluorohexylbromide | 335-56-8 | C₆BrF₁₃ |
| Pentadecafluorooctanoyl chloride | 335-64-8 | C₈C₁F₁₅O |
| 8:3 Fluorotelomer carboxylic acid | 34598-33-9 | C₁₁H₅F₁₇O₂ |
| Perfluoro-1-decene | 35328-43-9 | C₁₀F₂₀ |
| Perfluoroisohexane | 355-04-4 | C₆F₁₄ |
| Methyl heptafluoropropylketone | 355-17-9 | C₅H₃F₇O |
| 1H-Perfluorohexane | 355-37-3 | C₆HF₁₃ |
| Perfluorohexylchloride | 355-41-9 | C₆CₗF₁₃ |
| Perfluorohept-1-ene | 355-63-5 | C₇F₁₄ |
| 1H,1H,6H,6H-Perfluoro-1,6-hexanediol | 355-74-8 | C₆H₆F₈O₂ |
| Perfluorobutanesulfonic anhydride | 36913-91-4 | C₈F₁₈O₅S₂ |
| 1H,1H-Heptafluorobutylamine | 374-99-2 | C₄H₄F₇N |
| Perfluorobutyraldehyde | 375-02-0 | C₄HF₇O |
| Perfluoro-1,4-diiodobutane | 375-50-8 | C₄F₈I₂ |
| 1,6-Diiodoperfluorohexane | 375-80-4 | C₆F₁₂I₂ |
| 6:1 Fluorotelomer alcohol | 375-82-6 | C₇H₃F₁₃O |
| 1-H-Perflurodecane | 375-97-3 | C₁₀HF₂₁ |
| Perfluoro-3-methoxypropanoic acid | 377-73-1 | C₄HF₇O₃ |
| 8:2 Fluorotelomer sulfonic acid | 39108-34-4 | C₁₀H₅F₁₇O₃S |
| Bis(2,2,2-trifluoroethyl)amine | 407-01-2 | C₄H₅F₆N |
| Perfluorodiacetamide | 407-24-9 | C₄HF₆NO₂ |
| 2,2,2-Trifluoro-N-(2,2,2-trifluoroethyl)acetamide | 407-37-4 | C₄H₃F₆NO |
| 2,2,2-Trifluoroethyl trifluoroacetate | 407-38-5 | C₄H₂F₆O₂ |
| Ethyl perfluoroheptanoate | 41430-70-0 | C₉H₅F₁₃O₂ |
| 1H,1H,9H-Perfluorononyl acrylate | 4180-26-1 | C₁₂H₆F₁₆O₂ |
| 1H,1H-Perfluoropropylamine | 422-03-7 | C₃H₄F₅N |
| Perfluorooctanamide | 423-54-1 | C₈H₂F₁₅NO |
| (Perfluorohexyl)methyl methacrylate | 48076-44-4 | C₁₁H₇F₁₃O₂ |
| Perfluorooct-1-ene | 559-14-8 | C₈F₁₆ |
| 3H,3H-Perfluoropentane-2,2,4,4-tetraol | 66922-83-6 | C₅H₆F₆O₄ |
| Perfluoroglutaryl difluoride | 678-78-4 | C₅F₈O₂ |
| Dichloromethyl((perfluorohexyl)ethyl)silane | 73609-36-6 | C₉H₇Cₗ₂F₁₃Si |
| 2,2,3,3-Tetrafluoropropyl acrylate | 7383-71-3 | C₆H₆F₄O₂ |
| 2-(Perfluorooctyl)ethyldimethylchlorosilane | 74612-30-9 | C₁₂H₁₀C₁F₁₇Si |
| Perfluorohex-1-ene | 755-25-9 | C₆F₁₂ |
| 9-H-Perfluorononanoic acid | 76-21-1 | C₉H₂F₁₆O₂ |
| Trichloro((perfluorohexyl)ethyl)silane | 78560-45-9 | C₈H₄Cₗ₃F₁₃Si |
| Perfluoro(2-bromoethoxy)ethene | 85737-06-0 | C₄BrF₇0 |
| 2,4,6-Tris(pentafluoroethyl)-1,3,5-triazine | 858-46-8 | C₉F₁₅N₃ |
| Trimethoxy((perfluorohexyl)ethyl)silane | 85857-16-5 | C₁₁H₁₃F₁₃O₃Si |
| Dimethoxymethyl((perfluorohexyl)ethyl)silane | 85857-17-6 | C₁₁H₁₃F₁₃O₂Si |
| Perfluoropinacol | 918-21-8 | C₆H₂F₁₂O₂ |
| 3H-Perfluoro-4-hydroxy-3-penten-2-one | 1694-30-0 | C₅H₂F₆O₂ |
| Perfluoro-(2,5,8-trimethyl-3,6,9-trioxadodecanoic)acid | 65294-16-8 | C₁₂HF₂₃O₅ |
| Methyl perfluoroethyl ketone | 374-41-4 | C₄H₃F₅O |
| Perfluorobutyrylamidine | 375-19-9 | C₄H₃F₇N₂ |
| 2-(4H-Perfluorobutyl)-2-propanol | 2673-15-6 | C₇H₈F₈O |
| Octafluoroadipamide | 355-66-8 | C₆H₄F₈N₂O₂ |
| Bis(2,2,2-trifluoroethyl)sulfite | 53749-89-6 | C₄H₄F₆O₃S |
| Perfluoro-1-butanesulfonyl chloride | 2991-84-6 | C₄CₗF₉O₂S |
| Perfluoro-1-octanesulfonyl chloride | 423-60-9 | C₈CₗF₁₇O₂S |
| Trifluoromethyl trifluoromethanesulfonate | 3582-05-6 | C₂F₆O₃S |
| 2H-Perfluoroisobutyric acid | 564-10-3 | C₄H₂F₆O₂ |
| 3H,3H-Perfluoroheptane-2,4-dione | 20583-66-8 | C₇H₂F₁₀O₂ |
| Perfluoro-2,3-dimethylbutane | 354-96-1 | C₆F₁₄ |
| Perfluorononane | 375-96-2 | C₉F₂₀ |
| 1,6-Dibromododecafluorohexane | 918-22-9 | C₆Br₂F₁₂ |
| Ethyl nonafluoropentanoate | 424-36-2 | C₇H₅F₉O₂ |
| Methyl nonafluorovalerate | 13038-26-1 | C₆H₃F₉O₂ |
| Methyl perfluorohexanoate | 424-18-0 | C₇H₃F₁₁O₂ |
| 1,8-Diiodoperfluorooctane | 335-70-6 | C₈F₁₆I₂ |
| 8:1 Fluorotelomer alcohol | 423-56-3 | C₉H₃F₁₇O |
| 2-Perfluoropropyl-2-propanol | 355-22-6 | C₆H₇F₇O |
| 3-(Perfluoroisopropyl)propanol | 29819-73-6 | C₆H₇F₇O |
| 2-(Perfluorooctyl)ethanthiol | 34143-74-3 | C₁₀H₅F₁₇S |
| 5H-Perfluoropentanal | 2648-47-7 | C₅H₂F₈O |
| 1,1 ,2,2-Tetrafluoro-3-iodopropane | 679-87-8 | C₃H₃F₄I |
| 1-Bromoperfluorobutane | 375-48-4 | C₄BrF₉ |
| 1H,1H,7H-Perfluoroheptyl 4-methylbenzenesulfonate | 424-16-8 | C₁₄H₁₀F₁₂O₃S |
| N-Methyl-bis-heptafluorobutyramide | 73980-71-9 | C₉H₃F₁₄NO₂ |
| 5H,5H-Perfluoro-4,6-nonanedione | 113116-18-0 | C₉H₂F₁₄O₂ |
| 2-(2-Iodoethyl)perfluoropropane | 99324-96-6 | C₅H₄F₇I |
| Perfluoropentanamide | 355-81-7 | C₅H₃F₈NO |
| 2,2-bis(Trifluoromethyl)-2-hydroxyacetic acid | 662-22-6 | C₄H₂F₆O₃ |
| Perfluorosuberic acid | 678-45-5 | C₈H₂F₁₂O₄ |
| 9:1 Fluorotelomer alcohol | 307-37-9 | C₁₀H₃F₁₉O |
| 1H,1H,10H,10H-Perfluorodecane-1,10-diol | 754-96-1 | C₁₀H₆F₁₆O₂ |
| Trifluoroacetyl triflate | 68602-57-3 | C₃F₆O₄S |
| Allyl perfluoroisopropyl ether | 15242-17-8 | C₆H₅F₇O |
| Perfluoro(2-(2-propoxypropoxy)-1H,1H-propan-1-ol) | 14548-74-4 | C₉H₃F₁₇O₃ |
| 2,2-Bis(trifluoromethyl)propionyl fluoride | 1735-87-1 | C₅H₃F₇O |
| 2-Bromo-2-(Perfluorohexyl)ethene | 51249-64-0 | C₈H₂BrF₁₃ |
| 5-Bromo-4,4,5,5-tetrafluoropentanoic acid | 234443-22-2 | C₅H₅BrF₄O₂ |
| 1-Chloro-6-iodoperfluorohexane | 16486-97-8 | C₆CₗF₁₂I |
| 2-Chloro(perfluoro-2-methylpentane) | 67437-97-2 | C₆CₗF₁₃ |
| Difluoromethyl 2,2,3,3-tetrafluoropropyl ether | 35042-99-0 | C₄H₄F₆O |
| 1,8-Divinylperfluorooctane | 35192-44-0 | C₁₂H₆F₁₆ |
| Ethyl 5H-octafluoropentanoate | 2795-50-8 | C₇H₆F₈O₂ |
| Perfluoro-3,6-dioxaoctane-1,8-dioic acid | 55621-21-1 | C₆H₂F₈O₆ |
| 11:1 Fluorotelomer alcohol | 423-65-4 | C₁₂H₃F₂₃O |
| Perfluoro-3,6,9-trioxatridecanoic acid | 330562-41-9 | C₁₀HF₁₉O₅ |
| Methyl perfluoro-3,6-dioxaheptanoate | 39187-41-2 | C₆H₃F₉O₄ |
| 4:4 Fluorotelomer alcohol | 3792-02-7 | C₈H₉F₉O |
| 1H,1H-Perfluoropentylamine | 355-27-1 | C₅H₄F₉N |
| 2,2-Difluoroethyl triflate | 74427-22-8 | C₃H₃F₅O₃S |
| 1H,1H-Heptafluorobutyl epoxide | 1765-92-0 | C₆H₅F₇O |
| 1H,1H-Heptafluorobutyl triflate | 6401-01-0 | C₅H₂F₁₀O₃S |
| 3:3 Fluorotelomer carboxylic acid | 356-02-5 | C₆H₅F₇O₂ |
| 3-(Perfluoropropyl)propanol | 679-02-7 | C₆H₇F₇O |
| 1-Propenylperfluoropropane | 355-95-3 | C₆H₅F₇ |
| 3H-Perfluoropentane-2,4-dione | 77968-17-3 | C₅HF₇O₂ |
| 2-(Perfluoropropoxy)-1H,1H-perfluoropropanol | 26537-88-2 | C₆H₃F₁₁O₂ |
| 3H-Perfluoro-2,2,4,4-tetrahydroxypentane | 77953-71-0 | C₅H₅F₇O₄ |
| (2H-Perfluoropropyl)(1H,1H-perfluoroethyl)ether | 993-95-3 | C₅H₃F₉O |
| 3-(Perfluoro-2-butyl)propanoic acid | 239463-95-7 | C₇H₅F₉O₂ |
| 3 (Perfluoro -2-butyl)propanol | 239463-96-8 | C₇H₇F₉O |
| 2-Vinylperfluorobutane | 239795-57-4 | C₆H₃F₉ |
| 2-Iodoperfluorobutane | 375-51-9 | C₄F₉I |
| Methyl 4H-perfluorobutanoate | 356-32-1 | C₅H₄F₆O₂ |
| Methyl 5H-perfluoropentanoate | 54822-22-9 | C₆H₄F₈O₂ |
| Methyl tetrafluoro-2-(trifluoromethyl)propionate | 680-05-7 | C₅H₃F₇O₂ |
| N-Methyl-N-trimethylsilylheptafluorobutyramide | 53296-64-3 | C₈H₁₂F₇NOSi |
| Perfluoroadipoyl chloride | 336-06-1 | C₆C₁₂F₈O₂ |
| 1H,1H,6H,6H-Perfluorohexane-1,6-diol diacrylate | 2264-01-9 | C₁₂H₁₀F₈O₄ |
| 5H-Octafluoropentanoyl fluoride | 813-03-6 | C₅HF₉O |
| Methyl 1H,1H-perfluoropropyl ether | 378-16-5 | C₄H₅F₅O |
| 3H,3H-Perfluoropropyl triflate | 6401-00-9 | C₄H₂F₈O₃S |
| Pentafluoroallyl fluorosulfate | 67641-28-5 | C₃F₆O₃S |
| Perfluoroazelaic acid | 23453-64-7 | C₉H₂F₁₄O₄ |
| Perfluorocyclohexanecarbonyl fluoride | 6588-63-2 | C₇F₁₂O |
| (Perfluorocyclohexyl)methyl prop-2-enoate | 40677-94-9 | C₁₀H₅F₁₁O₂ |
| Perfluoro-3,7-dimethyloctanoic acid | 172155-07-6 | C₁₀HF₁₉O₂ |
| Perfluoro(2-ethoxyethane)sulfonic acid | 113507-82-7 | C₄HF₉O₄S |
| 7H-Perfluoroheptanoyl chloride | 41405-35-0 | C₇HCₗF₁₂O |
| 1H,1H-Perfluoroheptylamine | 423-49-4 | C₇H₄F₁₃N |
| 6H-Perfluorohex-1 -ene | 1767-94-8 | C₆HF₁₁ |
| 1-(Perfluorohexyl)ethane | 80793-17-5 | C₈H₃F₁₃ |
| 6-(Perfluorohexyl)hexanol | 161981-35-7 | C₁₂H₁₃F₁₃O |
| 3-(Perfluorohexyl)propanol | 80806-68-4 | C₉H₇F₁₃O |
| 2-(Perfluoro-3-methylbutyl)ethyl methacrylate | 65195-44-0 | C₁₁H₉F₁₁ₗO₂ |
| (Perfluoro-3-methylbutyl)-2-hydroxypropyl acrylate | 16083-76-4 | C₁₁H₉F₁₁O₃ |
| 3-(Perfluoro-3-methylbutyl)-1,2-propenoxide | 54009-81-3 | C₈H₅F₁₁O |
| (Perfluoro-5-methylhexyl)ethyl 2-methylprop-2-enoate | 50836-66-3 | C₁₃H₉F₁₅O₂ |
| 6:3 Fluorotelomer carboxylic acid | 27854-30-4 | C₉H₅F₁₃O₂ |
| Perfluorononanoyl chloride | 52447-23-1 | C₉CₗF₁₇O |
| 1H,1H-Perfluorononylamine | 355-47-5 | C₉H₄F₁₇N |
| 1H, 8H-Perfluorooctane | 307-99-3 | C₈H₂F₁₆ |
| 2-(Perfluorohexyl)ethanethiol | 34451-26-8 | C₈H₈F₁₃S |
| 1H,1H,8H-Perfluoro-1-octanol | 10331-08-5 | C₈H₄F₁₄O |
| 3-(Perfluorooctyl)propanol | 1651-41-8 | C₁₁H₇F₁₇O |
| Perfluoro-1,3,5-trimethylcyclohexane | 374-76-5 | C₉F₁₈ |
| (2H-Perfluoroethyl)(1H,1H,3H-perfluoropropyl)ether | 16627-68-2 | C₅H₄F₈O |
| 2,2,3,3-Tetrafluoropropyl trifluoroacetate | 107551-72-4 | C₅H₃F₇O₂ |
| 4,4-bis(Trifluoromethyl)-4-fluoropropanoic acid | 243139-62-0 | C₆H₅F₇O₂ |
| 3-(Perfluoroisopropyl)-2-propenoic acid | 243139-64-2 | C₆H₃F₇O₂ |
| 2,2,2-Trifluoroethyl perfluorobutanesulfonate | 79963-95-4 | C₆H₂F₁₂O₃S |
| Trimethylsilyl perfluorobutanesulfonate | 68734-62-3 | C₇H₉F₉O₃SSi |
| 1H,1H-Perfluoro-3,6,9-trioxadecan-1-ol | 147492-57-7 | C₇H₃F₁₃O₄ |
| 1H,1H,11H,11H-Perfluorotetraethylene glycol | 330562-44-2 | C₈H₆F₁₂O₅ |
| Perfluoro-3,6,9-trioxadecanoic acid | 151772-59-7 | C₇HF₁₃O₅ |
| 1H,2H,2H-Perfluorobutane | 86884-16-4 | C₄H₃F₇ |
| Difluoromethyl 2H-perfluoropropyl ether | 56860-85-6 | C₄H₂F₈O |
| 1H,1H,2'H-Perfluorodipropyl ether | 1000-28-8 | C₆H₃F₁₁O |
| Perfluoro-3,6-dioxadecanoic acid | 137780-69-9 | C₈HF₁₅O₄ |
| Perfluoro-3,6,9-trioxaundecane-1,11-dioic acid | 55621-18-6 | C₈H₂F₁₂O₇ |
| 1H,1H,8H,8H-Perfluoro-3,6-dioxaoctane-1,8-diol | 129301-42-4 | C₆H₆F₈O₄ |
| Perfluorooctanamidine | 307-31-3 | C₈H₃F₁₅N₂ |
| 3-(Perfluorobutyl)-1-propanol | 83310-97-8 | C₇H₇F₉O |
| 2(2H-Perfluoro-2-propyl)acetic acid | 17327-33-2 | C₅H₄F₆O₂ |
| 2-Allyloxyperfluoroethanesulfonyl fluoride | 73606-13-0 | C₅H₅F₅O₃S |
| Bis(1H,1H-perfluoropropyl)aminₗe | 883498-76-8 | C₆H₅F₁₀N |
| 1H,1H-Perfluorobutyl perfluorobutanesulfonate | 883499-32-9 | C₈H₂F₁₆O₃S |
| 3-(Perfluoro-1-propyl)-1,2-propanediol | 1992-91-2 | C₆H₇F₇O₂ |
| Perfluoro-3,6-dioxaheptanoic acid | 151772-58-6 | C₅HF₉O₄ |
| 5:1 Fluorotelomer alcohol | 423-46-1 | C₆H₃F₁₁O |
| (Perfluorooctyl)propyl acetate | 150225-00-6 | C₁₃H₉F₁₇O₂ |
| 2-Aminohexafluoropropan-2-ol | 31253-34-6 | C₃H₃F₆NO |
| 9-Chloro-perfluorononanoic acid | 865-79-2 | C₉HCₗF₁₆O₂ |
| Methyl 3-chloroperfluoropropanoate | 127589-63-3 | C₄H₃CₗF₄O₂ |
| 3:2 Fluorotelomer alcohol | 755-40-8 | C₅H₅F₇O |
| 3-(Perfluoro-2-butyl)propane-1,2-diol | 125070-38-4 | C₇H₇F₉O₂ |
| Perfluoroheptanoyl chloride | 52447-22-0 | C₇CₗF₁₃O |
| 1H,1H,5H-Perfluoropenty1-1,1,2,2-tetrafluoroethylether | 16627-71-7 | C₇H₄F₁₂0 |
| 2,3,3,3-Tetrafluoro-2-(perfluoropentoxy)propan-1-ol | 78693-85-3 | CsH₃F₁₃O₂ |
| 2(Perfluoro-2-propyl)ethanol | 90999-87-4 | C₅H₅F₇O |
| 3-(2,2,3,3-Tetrafluoropropoxy)prop-1-ene | 681-68-5 | C₆H₈F₄O |
| 2-Iodo-1h,1h,2h,3h,3h-perfluorodecan-1-ol | 16083-64-0 | C₁₀H₆F₁₅IO |
| 3-Perfluoroheptylpropanoic acid | 812-70-4 | C₁₀H₅F₁₅O₂ |
| 7:3 Fluorotelomer alcohol | 25600-66-2 | C₁₀H₇F₁₅O |
| N-Methylperfluoroheptanamide | 89932-74-1 | C₈H₄F₁₃NO |
| [(Heptafluoropropyl)sulfanyl]acetic acid | 204057-69-2 | C₅H₃F₇O₂S |
| Tris(2,2,2-trifluoroethyl) borate | 659-18-7 | C₆H₆BF₉O₃ |
| Pentafluoropropylamidine | 422-62-8 | C₃H₃F₅N₂ |
| tris(Trifluoroethoxy)methane | 58244-27-2 | C₇H₇F₉O₃ |
| 1H,1H,3H-Perfluoropropyl triflate | 6401-02-1 | C₄H₃F₇O₃S |
| 1H,1H,8H,8H-Perfluorooctane-1,8-diol | 90177-96-1 | C₈H₆F₁₂O₂ |
| 3-(Perfluoroisopropyl)-(2E)-difluoropropenoic acid | 103229-89-6 | C₆HF₉O₂ |
| (Heptafluoropropyl)trimethylsilane | 3834-42-2 | C₆H₉F₇Si |
| Nonafluoropentanamide | 13485-61-5 | C₅H₂F₉NO |
| 1-(Perfluorohexyl)octane | 133331-77-8 | C₁₄H₁₇F₁₃ |
| Methyl 2H,2H,3H,3H-perfluoroheptanoate | 132424-36-3 | C₈H₇F₉O₂ |
| 2-(Trifluoromethoxy)ethyl trifluoromethanesulfonate | 329710-76-1 | C₄H₄F₆O₄S |
| 3-(Perfluorobutyl)propanoic acid | 80705-13-1 | C₇H₅F₉O₂ |
| (Perfluorooctyl)propanoyl chloride | 89373-67-1 | C₁₁H₄CₗF₁₇O |
| 2H-Perfluoro(2-methylpentane) | 30320-28-6 | C₆HF₁₃ |
| 4,4,5,5,6,6-hexafluoro-1,3,2-dithiazinane 1,1,3,3-tetraoxide | 84246-29-7 | C₃HF₆NO₄S₂ |
| 1H,2H-Hexafluorocyclopentene | 1005-73-8 | C₅H₂F₆ |
| 4-(1H,1H,2H,2H-Perfluorodecylthio)phenol | 142623-70-9 | C₁₆H₉F₁₇OS |
| Perfluorohexanesulfonamide | 41997-13-1 | C₆H₂F₁₃NO₂S |
| 2-Amino-2H-perfluoropropane | 1619-92-7 | C₃H₃F₆N |
| Perfluoro(4-methoxybutanoic) acid | 863090-89-5 | C₅HF₉O₃ |
| 2H-Perfluoropropanoic anhydride | 337-83-7 | C₆H₂F₈O₃ |
| 2,2,3,3-Tetrafluoropropyl ether | 82914-35-0 | C₆H₆F₈O |
| Methyl 3H-perfluoroisopropyl ether | 568550-25-4 | C₄H₄F₆O |
| Methyl 4H-perfluorobutyl ketone | 93449-49-1 | C₆H₄F₈O |
| 6:2 Fluorotelomer phosphate monoester | 57678-01-0 | C₈H₆F₁₃O₄P |
| Perfluorobutanol | 3056-01-7 | C₄HF₉O |
| 8H-Perfluorooctanoic acid | 13973-14-3 | C₈H₂F₁₄O₂ |
| 1,2-bis(1,1,2,2-Tetrafluoroethoxy)ethane | 358-39-4 | C₆H₆F₈O₂ |
| 4-(Perfluorobutyl)-2-butanone | 140834-64-6 | C₈H₇F₉O |
| Methyl perfluoropentyl ketone | 2708-07-8 | C₇H₃F₁₁O |
| 4-[3-(Perfluorobutyl)-1-propyloxy]benzyl alcohol | 892154-51-7 | C₁₄H₁₃F₉O₂ |
| 4-((Perfluorohexyl)ethyl)phenylmethanol | 356055-76-0 | C₁₅H₁₁F₁₃O |
| (1S,4S)-3-(Heptafluorobutyryl)camphor | 115224-00-5 | C₁₄H₁₃F₇O₂ |
| 2,2,3,3,4,4,5,5,6,6,6-Undecafluorohexanal | 754-79-0 | C₆HF₁₁O |
| Methyl 2H,2H-perfluorobutyl ether | 376-98-7 | C₅H₅F₇O |
| 1H,1H,1H,2H-Perfluoro-2-heptanol | 914637-05-1 | C₇H₅F₁₁O |
| 1H,1H-Perfluorohexylamine | 355-34-0 | C₆H₄F₁₁N |
| N,N-dimethyl-2H-perfluoroethanamine | 1550-50-1 | C₄H₇F₄N |
| 2H-Perfluoroisopropyl 2-fluoroacrylate | 74359-06-1 | C₆H₃F₇O₂ |
| 1,1,2-Trifluoro-1-methoxy-2-(trifluoromethoxy)ethane | 996-56-5 | C₄H₄F₆O₂ |
| 3H-Perfluorobutanoic acid | 379-90-8 | C₄H₂F₆O₂ |
| ((Perfluorooctyl)ethyl)phosphonic acid | 80220-63-9 | C₁₀H₆F₁₇O₃P |
| 1,1-bis(Trifluoromethyl)methoxy-2-ethanol | 63693-13-0 | C₃H₆F₆O₂ |
| Ethyl perfluoropentanyl ketone | 383177-55-7 | C₈H₅F₁₁O |
| Perfluoro-tert-butyl isobutyrate | 914637-43-7 | C₈H₇F₉O₂ |
| Perfluoro-4-isopropoxybutanoic acid | 801212-59-9 | C₇HF₁₃O₃ |
| Ethyl 2H-perfluoropropyl ether | 380-34-7 | C₅H₆F₆O |
| Heptafluorobutanoic anhydride | 336-59-4 | C₈F₁₄O₃ |
| Perfluorobutanesulfonyl fluoride | 375-72-4 | C₄F₁₀O₂S |
| Trifluoroacetic anhydride | 407-25-0 | C₄F₆O₃ |
| Perfluoro(2-methyl-3-oxahexanoyl) fluoride | 2062-98-8 | C₆F₁₂O₂ |
| Perfluorotridecanoic acid | 72629-94-8 | C₁₃HF₂₅O₂ |
| 2H,3H-Decafluoropentane | 138495-42-8 | C₅H₂F₁₀ |
| 3 -(Perfluoroethyl)propanol | 148043-73-6 | C₅H₇F₅O |
| 3-Ethoxyperfluoro(2-methylhexane) | 297730-93-9 | C₉H₅F₁₅O |
| Perfluoro-1,2-dimethylcyclohexane | 306-98-9 | C₈F₁₆ |
| 2,3-Dichlorooctafluorobutane | 355-20-4 | C₄Cₗ₂F₈ |
| Pentafluoropropanoic anhydride | 356-42-3 | C₆F₁₀O₃ |
| 1H,1H,3H-Perfluorobutanol | 382-31-0 | C₄H₄F₆O |
| Perfluoromethyldecalin | 51294-16-7 | - |
| 2,2,3,3,4,4,5-Heptafluorotetrahydro-5-(nonafluorobutyl)furan | 335-36-4 | C₈F₁₆O |
| 1-Hydroperfluoroheptane | 375-83-7 | C₇HF₁₅ |
| Perfluorodecane | 307-45-9 | C₁₀F₂₂ |
| 8:2 Fluorotelomer phosphate monoester | 57678-03-2 | C₁₀H₆F₁₇O₄P |
| 2H,2H,3H,3H-Perfluorooctanoic acid | 914637-49-3 | C₈H₅F₁₁O₂ |
| Sodium perfluorooctanoate | 335-95-5 | C₈F₁₅NaO₂ |
| Potassium perfluorooctanoate | 2395-00-8 | C₈F₁₅KO₂ |
| N,N-Diethyl-2H-perfluoropropanamine | 309-88-6 | C₇H₁₁F₆N |
| 1H,1H-Perfluoro-1-pentanol | 355-28-2 | C₅H₃F₉O |
| 1H,1H,5H-Perfluoropentyl methacrylate | 355-93-1 | C₉H₈F₈O₂ |
| 1-Pentafluoroethylethanol | 374-40-3 | C₄H₅F₅O |
| 1 -Perfluoropropylethanol | 375-14-4 | C₅H₅F₇O |
| 1,2-Dibromohexafluoropropane | 661-95-0 | C₃Br₂F₆ |
| Ethyl pentafluoropropionyl acetate | 663-35-4 | C₇H₇F₅O₃ |
| 1,4-Divinylperfluorobutane | 678-65-9 | C₈H₆F₈ |
| 3:2 Fluorotelomer iodide | 1513-88-8 | C₅H₄F₇I |
| 1-Iodo-1H,1H,2H,2H-perfluorononane | 2043-52-9 | C₉H₄F₁₅I |
| (E)-Perfluoro(4-methyl-2-pentene) | 3709-71-5 | C₆F₁₂ |
| N-(Phenylmethyl)perfluorobutanamide | 560-02-1 | C₁₁H₈F₇NO |
| 3,5,6-Trichloroperfluorohexanoic acid | 2106-54-9 | C₆HCₗ₃F₈O₂ |
| Hexafluoroisopropyl acrylate | 2160-89-6 | C₆H₄F₆O₂ |
| 3,5,7,8-Tetrachloroperfluorooctanoic acid | 2923-68-4 | C₈HCₗ₄F₁₁O₂ |
| Perfluoro-1,2-dimethylcyclobutane | 2994-71-0 | C₆F₁₂ |
| 2H-Perfluoro-5-methyl-3,6-dioxanonane | 3330-14-1 | C₈HF₁₇O₂ |
| Perfluorooctanedioic diamide | 3492-23-7 | C₈H₄F₁₂N₂O₂ |
| Perfluoro-3,6-dimethyl-1,4-dioxan-2-one | 7309-84-4 | C₆F₁₀O₃ |
| Methyl perfluoro(2-propoxypropanoate) | 13140-34-6 | C₇H₃F₁₁O₃ |
| Perfluoro-2-methyl-3-oxahexanoic acid | 13252-13-6 | C₆HF₁₁I₃ |
| 1H,1H,2H-Perfluorocyclopentane | 15290-77-4 | C₅H₃F₇ |
| ((2,2,3,3-Tetrafluoropropoxy)methyl)oxirane | 19932-26-4 | C₆H₈F₄O₂ |
| 2-(Perfluorobutyl)ethanethiol | 34451-25-7 | C₆H₅F₉S |
| 1H,1H,3H-Perfluorobutyl 2-methylacrylate | 36405-47-7 | C₈H₈F₆O₂ |
| 1-(Perfluorohexyl)-2-iodopropane | 38550-34-4 | C₉H₆F₁₃I |
| 3-(Perfluorohexyl)-1,2-epoxypropane | 38565-52-5 | C₉H₅F₁₃O |
| 3-(Perfluorooctyl)-1,2-propenoxide | 38565-53-6 | C₁₁H₅F₁₇O |
| (1R,4R)-3-(Heptafluorobutyryl)-camphor | 51800-99-8 | C₁₄H₁₃F₇O₂ |
| 2H-Hexafluoropropyl allyl ether | 59158-81-5 | C₆H₆F₆O |
| 5-Iodoperfluoro-3-oxapentanesulfonyl fluoride | 66137-74-4 | C₄F₉IO₃S |
| (Perfluoro-n-octyl)ethane | 77117-48-7 | C₁₀H₅F₁₇ |
| (2H-Perfluoroethoxy)methyloxirane | 85567-21-1 | C₅H₆F₄O₂ |
| 1-(Perfluorofluorooctyl)propane-2,3-diol | 94159-84-9 | C₁₁H₇F₁₇O₂ |
| 3-Methoxyperfluoro(2-methylpentane) | 132182-92-4 | C₇H₃F₁₃O |
| Hexafluoro-2-methyl-2-propanol | 1515-14-6 | C₄H₄F₆O |
| 4:2 Fluorotelomer sulfonic acid | 757124-72-4 | C₆H₅F₉O₃S |
| 4H-Perfluorobutanoic acid | 679-12-9 | C₄H₂F₆O₂ |
| Perfluoro-2,5-dimethyl-3,6-dioxanonanoic acid | 13252-14-7 | C₉HF₁₇O₄ |
| Sodium perfluorodecanesulfonate | 2806-15-7 | C₁₀F₂₁NaO₃S |
| Perfluoroheptanes (branched and linear) | NOCAS 897718 | - |
| Poly(1,1-difluoroethylene) (PVDF) | 24937-79-9 | -(C₂H₂F₂)n- |
| poly(1-fluoroethylene) or poly vinyl fluoride (PVF) | 24981-14-4 | (C₂H₃F)n |

PFAS materials can be employed for various applications (and therefore found in various waste sources), including for example: various types of plastics, foams (e.g. fire retardant foams and other concentrated film forming foam (AFFF)), liquid crystals, chemical crop protectants, lubricants, and various other stain-resistant, waterproof, other surface repellant products for fabrics, carpet, leather, paints, cleaning products, food packaging, and/or nonstick products. It is estimated that as many as 9000 or more products containing fluorinated organic compounds have been produced in the past 40 years. As a result there is a variety of PFAS materials and PFAS-containing waste sources.

PFAS materials are often comingled with various other components in need of the processing and/or recycling, making up the PFAS-containing waste sources. For example, additional waste sources and components often include metals, film or fiber layers including other polymers, etc. Additional exemplary polymers that are often used in combination with PFAS materials include polymeric coatings, including for example, ethyl vinyl acetate (EVA), polyethylene terephthalate (PET), polyvinyl chlorine (PVC), and the like.

As one skilled in the art will ascertain, the waste sources can differ based upon factors including the metals, polymer types, thickness and/or density of the waste source, etc. that are employed. The methods are able to process and recycle to convert the myriad waste sources into desirable outputs.

### Thermolysis Methods

The methods relate to multicomponent and multistep, energy-assisted, chemical reaction using thermolysis methods to safely and efficiently process and recycle materials in order to convert PFAS materials and PFAS-containing waste sources to gas/vapor mixtures and carbonaceous materials, namely a Clean Fuel Gas source and a Char. Beneficially, the gas/vapor including halogens (in particular fluorine) are cleaned and removed as disposable (or reusable and salable byproduct) salts. In addition various materials, such as metals are recovered substantially in their original form and most have not been melted. As a result of the methods described herein, a clean Char source, Clean Fuel Gas and fluoride salts are the only products of the system.

Beneficially, the methods provide for complete defluorination of the PFAS compounds. According to the methods described herein, at least 99% or at least 99.9% of the PFAS compounds in the PFAS material and/or PFAS-containing waste source are destroyed. Moreover, the at least 99% or at least 99.9% of the destroyed PFAS compounds include any PFAS byproducts formed during the methods. These destroyed compounds include toxic residues from the destruction of the PFAS compounds. This includes for example, any short-chain PFAS byproducts, also referred to as short-chain fluorinated molecules (e.g., CF₄), gas byproducts (e.g., HF), highly electronegative fluorine atoms and free radicals, and halogenated dioxins and furans. These byproducts are often more volatile that the PFAS compounds and present an extreme environmental hazard. Therefore, it is critical that the methods destroy these byproducts in addition to the PFAS compounds. Beneficially, the destruction or neutralization of these byproducts prevents the need for any further incineration and/or landfilling in a hazardous waste facility.

The methods provide for the complete defluorination of the PFAS compounds through use of the multicomponent and multistep, energy-assisted, chemical reaction in the thermolysis system. As referred to herein the thermolysis system and methods employ a continuous, oxygen-free thermal processing for the PFAS material and/or PFAS-containing waste sources using heat energy. Beneficially, the methods and systems convert the PFAS material and/or PFAS-containing waste sources by destroying PFAS compounds and not generating additional toxic byproducts including halogenated organic compounds. As a further benefit, the methods generate clean, useable fuel gas sources substantially-free or free of PFAS byproducts including halogenated organic compounds. As a still further benefit, the methods and systems generate a Char containing carbon and other valuable metals and components (depending upon the makeup of the PFAS-containing waste source) which are substantially-free or free of PFAS byproducts and halogenated organic compounds and which can be extracted to obtain further value from the methods.

As a still further benefit, the invention providing for the generation of a Clean Fuel Gas and Char without the formation of (along with the destruction of) halogenated compounds beneficially prolongs the life span of the systems employed for the thermolysis methods. Without being limited according to a particular mechanism, the reduction of formation of PFAS byproducts and halogenated compounds reduces the corrosive damage caused to the systems, such as valves, filters, reactors and the like.

In an embodiment, the methods of using a multicomponent and multistep, energy-assisted, chemical reaction to defluorinate PFAS compounds in the PFAS material and/or PFAS-containing waste source include the steps of inputting the material and/or waste sources into the thermolysis system, cleaving the C-C and the C-H bonds (resulting in an abundance of H₂ along with C₁-C₄ aliphatic chains) and cleaving the C-F bonds by providing an excess of H₂ in the reactor(s) to drive the formation of HF. The H-F bond is the strongest of the fluorine bonds. The fluorinated polymer fragments continue to process in the reactor until all fluorine is converted to HF.

In some embodiments the waste source is further saturated with an excess of hydrogen (protons) to drive the reaction with highly electronegative fluorine atoms to rapidly form HF. Without being limited to a particular mechanism of action, with the abundant presence of H₂ from the polymer decomposition and the high electronegativity of the fluorine atom, there will be strong chemical force to form HF. In an embodiment, excess hydrogen can be provided to the reactor(s) to create a further abundance of hydrogen to drive the formation of the preferred stable form of HF.

In an exemplary embodiment, a source of hydrogen, such as polymeric olefins (or olefin polymers), including for example HDPE, LDPE, polyethylene, polypropylene, polystyrene, PVC or combinations thereof, is added to the reactor system. In an embodiment, a ratio of PFAS material (e.g. fluorinated polymer) to excess hydrogen source can be from about 1 to about 2, about 1 to about 3, about 1 to about 4, about 1 to about 5, or greater.

In a further exemplary embodiment, a PFAS material may need to be saturated (e.g. providing an organic material such a cellulose) with a hydrogen source. In an exemplary embodiment a PFAS material (e.g. PFOS used in AFFF foams or liquids) can be combined with an organic material that absorbs the PFOS, such as sawdust (wood), to enable the fluorine atoms to react with the hydrogen atoms that are produced from the cellulose source upon thermolysis. In an embodiment, a ratio of PFAS material (e.g. fluorinated polymer) to organic material for saturation is at least about 1 to about 1 (1:1), or can be from about 1 to about 5 to about 5 to about 1.

In an embodiment it is desired to have a fluorine concentration in the mixture that is less than about 10% fluorine, less than about 9% fluorine, less than about 8% fluorine, or less than about 7% fluorine. The fluorine concentration of the PFAS material and/or PFAS-containing waste source can be adjusted by saturating the material as described to provide excess hydrogen.

Thereafter the HF (which is in the form of a hot gas at the temperature of the reactor, e.g. 600-650°C) is captured and converted to the gas scrubber(s) within the system. Beneficially, in embodiments the HF gas does not need to be cooled before entering the gas scrubber; instead, it goes from an oil-water scrubber to a water scrubber where the temperature is less than about 100°C. There the HF is neutralized with a mineral basic compound. The mineral basic compound can include an aqueous solution, such as calcium base. In embodiments a mineral basic compound can be a sodium or potassium fluoride which is soluble in water, with the addition of a further removal step. It is desirable to add a water soluble source of calcium to precipitate a fluoride salt. Examples of water soluble calcium ions can include Ca Acetate (34.7 g/100ml water solubility), Ca(NO₃)₂ (121 g/100ml), and Ca Nitrite, etc. Preferably, a water-soluble calcium compound is utilized to precipitate CaF₂ for removal. This final step removes the fluorine halogens in a basic aqueous scrubber. In an embodiment, the neutralized HF is converted to a non-toxic mineralized salt, namely a fluoride salt (e.g. CaF₂) and can be disposed or reused. Again, without being limited to a particular mechanism of action, the high hydration/solvation energy of the H-halogen species causes them to dissolve immediately and then they are safely removed by basic neutralization into non-toxic mineral salts (e.g. calcium or sodium fluoride). In an embodiment, the neutralized ionic mineral salts could be further repurposed as a building block (or raw material) for synthesis of other fluorinated compounds.

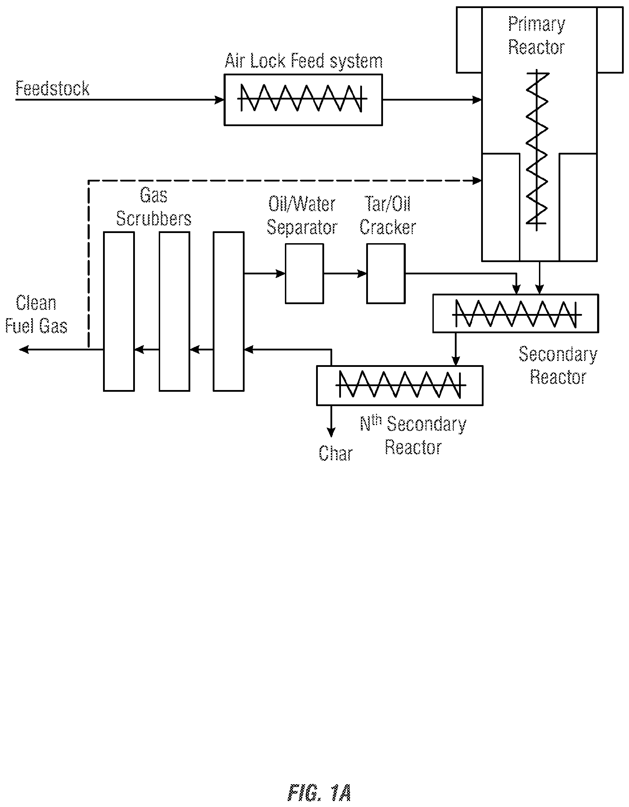

In an aspect the systems and apparatuses (not claimed) utilized for the methods and processes of the present invention includes at least the following components as substantially depicted in FIGS. 1A-1B, including: a feedstock input, airlock, at least one reactor (and preferably a series of reactors), gas scrubbers, tar/oil crackers (or may be referred to as cracking reactor), collection tanks for Char, and output for Clean Fuel Gas. Additional optional components may include for example, a carbon removal unit for removal of carbon from the Char (or other removal units to remove additional valuable components from the Char). Modifications to these systems and apparatuses, including as described herein, are considered within the level of ordinary skill in the art based upon the description of the invention set forth herein.

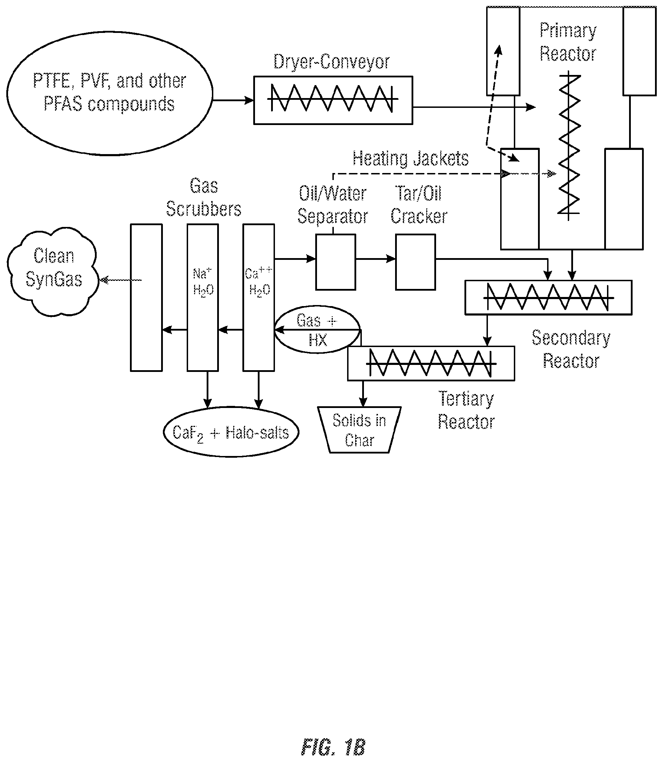

In an aspect the methods include the steps as substantially depicted in FIGS. 1A-1B, including the following processing steps: shredding, chopping and/or grinding of the waste input (optional and employed depending on waste source); a reaction or series of thermolysis reactions in a substantially oxygen-free continuous, low pressure thermolysis process with indirect heating; employing more than one reactor for the thermolysis reactions; separation of Char; a tar and oil reprocessing or cracking step; scrubbing of the fuel gas; and removal of fluoride salts (depicted in FIG. 1B).

The methods of the present invention may optionally include one or more of the following steps: an initial separation of components of the waste source, such as removing metal framing and/or glass panels for reuse/recycle; drying the waste input; suturing a waste input (e.g. adding wood chips or saw dust to a AFFF for PFAS destruction); removing any other valuable components from the waste source (e.g. the solar cells or portions thereof); extraction of metals or other components from the ground and/or shredded waste input; separation steps and/or additional gas scrubbers; and/or collection and separation of components from the Char *(e.g.* metals, silicon).

The methods of the present invention can be carried out in a variety of apparatus for thermolysis. An exemplary device or series of reactors, further including oil and other separators, char/oil separators, gas scrubbers, evaporators, and the like are shown for example in U.S. Patent No. 9,631,153. As a benefit, the systems used in the method of the invention can be scaled for small, transportable systems for deployment to clean and process waste sources at remote contaminated sites and/or provide law scale facility thermolysis systems to process 10, 50, or near 100 tons of waste sources per day. As a further benefit, the methods utilizing these systems provide a far more cost-effective (in addition to safe) processing of the waste sources, including less than one tenth the cost of high temperature incineration.

In an aspect the invention includes an initial optional step of separating components of the PFAS-containing waste source for processing according to the invention. In an aspect, one or more portions of the waste may be separated for independent processing, recycling and/or reuse. This separation can be a manual or automatic process.

In an aspect, the invention includes an initial shredding, chopping and/or grinding step of the waste source, each of which may be referred to herein as shredding. The scope of the invention is not limited with respect to this initial processing step to reduce the size of the waste and provide a substantially uniform input source. In an aspect, the waste source can be placed directly into a grinder or shredder. In an aspect, the grinding and/or shredding step provides substantially uniform pieces of the input source. In an aspect, the grinding and/or shredding step provides pieces of the input source having an average diameter of less than about 2 inches. In an aspect, the shredding and/or grinding can include a first coarse step followed by a fine shredding and/or grinding step. In an alternative aspect, the shredding and/or grinding can include a single processing step. Various conventional shredding and/or grinding techniques may be employed without limiting the scope of the invention described herein.

Beneficially, according to the invention a variety of PFAS material and/or PFAS-containing waste sources can be processed according to the invention without substantial extraction steps to remove or separate various components for distinct and separate processing. This is a significant benefit over processing systems and techniques of the prior art requiring substantial sorting and separation of components of waste sources.

In an aspect, the invention includes an optional extraction step for the removal of certain metals (or other components) from the ground and/or shredded waste source input. In an aspect, a step for extraction of metals (or other components) immediately follows the shredding and/or grinding of the waste source. The removal step may include any techniques known to those skilled in the art to which the invention pertains, including a combination of mechanical and/or manual removal. In an aspect, the separation may include the use of magnet separators, including magnetic and high magnetism separators, for the attraction and removal of ferrous metals. In a further aspect, the use of eddy current can be used to remove metals, such as copper and aluminum. In an aspect, the separation may include the use of electrostatic separation. In an aspect, the separation may include the use of specific gravity separation. In an aspect, the separation may include the use of an air or fluid sorting device.

In an aspect, the methods involve a reactor or series of thermolysis reactors using a substantially oxygen-free (or oxygen-free) continuous, low pressure, thermolysis process using heat energy. In an aspect, low pressure includes from about 10 to about 100 millibar, or any range therein. In an aspect, the invention involves an oxygen-free continuous, low pressure, thermolysis process in a reactor or series of reactors. As referred to herein, the oxygen-free process in the reactor(s) does not include air or oxygen in contact with the waste input source. Beneficially, as a result of the reduction and/or elimination of oxygen from the methods of the present invention, the waste input sources are not exposed to flame and/or fires or plasma source and therefore do not form hazardous byproducts, polycyclic aromatic hydrocarbons (PAHs), halogenated dibenzodioxins, halogenated dibenzofurans, biphenyls, and/or pyrenes, or other halogenated (fluorinated) organics.

In an aspect, the invention employs the substantially oxygen-free or oxygen-free continuous, low pressure thermolysis process with supply of heat energy. Thermolysis methods are known to employ different methods and amounts of heat energy, including for example: Low temperature thermolysis with a process temperature below 500°C; medium-temperature thermolysis in the temperature range 500 to 800°C; and melting thermolysis at temperatures of 800 to 1,500°C. According to aspects of the present invention, the substantially oxygen-free or oxygen-free continuous, low pressure thermolysis process applies indirect heating. In an aspect, the heating includes processing the waste source input at temperatures of about 400°C-800°C, preferably about 450°C-650°C, and more preferably about 600°C-650°C. The disclosed temperature ranges beneficially gasify the halogenated aliphatic and aromatic compounds by thermally decomposing these compounds.

Beneficially, the use of a lower temperature thermolysis process places less stress on a reactor(s) (such as steel reactors), requires less energy to run the continuous process according to the invention, and further maintains metals in contact with the system at lower temperature ranges which improves longevity, processing, etc. within a plant facility.

In an aspect, a reactor or series of reactors (also referred to as cascading reactors) allows for the thermolysis processing over the lower range of temperatures from about 400°C to about 800°C, preferably about 450°C-600°C, and more preferably about 600°C-650°C. As one skilled in the art understands, there is not a single processing temperature for an input source according to the invention; instead, a range of temperatures within a reactor (or series of reactors) is obtained. In preferred aspects, the reactor(s) employed according to the methods of the invention do not require design for withstanding high temperature/pressure, as the relatively low temperature and pressures are employed (such as on average about 650°C and ambient pressures of on average about 50 mbar).

The continuous thermolysis process is carried out in at least one reactor to undergo at least partial gasification. Various reactors known in the art can be employed, including for example, rotary drum reactors, shaft reactors, horizontal reactors, entrained-flow gasifiers, fixed-bed gasifiers, entrained-flow gasifiers, or the like. Exemplary reactors are disclosed, for example in, U.S. Patent No. U.S. Patent No. 9,631,153, Publication No. 2014/0182194 and DE 100 47 787, DE 100 33 453, DE 100 65 921, DE 200 01 920 and DE 100 18 201. As one skilled in the art will ascertain the number, sequence and scale of the reactors employed according to the invention can be adapted pursuant to the scale and volume of PFAS material and/or PFAS-containing waste source inputted, which are embodied within the scope of the invention.

In some embodiments, a primary reactor employed according to the invention may comprise, consist of or consist essentially of input region with distributor, reactor mixing chamber, high-temperature region, high-temperature chamber, heating jacket chamber with burners, conversion section, inner register, and/or heat transfer register. In exemplary embodiments, a secondary (or tertiary) reactor employed and may comprise, consist of or consist essentially of gas compartment with dome, high-temperature chamber with vertical conveying device, inner register and outer register, conversion section with conveyor device, heating jacket chamber and/or combustion chamber.

In an aspect, the reactor(s) are jacket heated. In an aspect, the reactors are vertically and horizontally disposed. In an aspect, at least two reactors are employed. In an aspect, at least three reactors are employed. In an aspect, the reactor(s) may optionally undergo agitation. In a preferred aspect, at least one reactor or a primary reactor is vertical with a moving bed design and counter-current flow for the fuel gas along the heated walls into secondary reactors. Without being limited according to an embodiment of the invention, such designs minimize the creation of undesirable tars and fuel oils. In a further preferred embodiment, a moving bed design is further employed for a secondary horizontal reactor which extends the controlled reaction time and temperature of the fuel gas and char from improved solid/gas and gas/gas reactions according to the invention.

The PFAS material and/or PFAS-containing waste source undergo the conversion in the reactor(s) for an amount of time sufficient to provide at least partial conversion and substantially as set forth according to the methods of U.S. Patent No. 9,631,153. In an aspect, the amount of retention time in a reactor(s) varies from at least about 10 minutes, at least about 20 minutes, at least about 30 minutes, or more as may vary based upon factors including for example the fluorine content (% fluorine in waste source), size of the input source which impacts the gasification reaction, and the like.

In an aspect, the pressure in the reactor(s) is held constant within a pressure range from about 10 to about 100 millibar, or preferably from about 20 to about 50 millibar.

In an aspect, the methods further include a tar and oil cracking step. As one skilled in the art appreciates, tars and oils are an unavoidable product of the pyrolysis process, which are a non-heterogenous mixture of olefins and paraffins, which contain tars and hazardous component. These hazardous components include carcinogenic benzene, toluene and chlorinated -brominated components, if PVC and/or flame retardants are present in the plastics feedstock. The pyrolytic oils have a low flash point and are known to be extremely hazardous (often requiring hazardous regulatory permits in various countries).

Beneficially, according to the invention such unavoidably created tars and oils are merely an intermediate and are subsequently cracked. As referred to herein, "cracking" refers to the process whereby complex organic molecules are broken down into simpler molecules, such as light hydrocarbons, by the breaking of carbon-carbon bonds in the precursors. Thus, cracking describes any type of splitting of molecules under the influence of heat, catalysts and solvents. Accordingly, tars and oils are not collected or an output of the thermolysis methods of the invention. In an aspect, a further gas converter (cracking reactor) will be employed, such as where higher organic components are further degraded. This removal and conversion of these heavy oils or tars into Clean Fuel Gas is desired to remove these materials which selectively absorb halogenated hazardous substances. In an aspect, the step recycles tars and oils in order to remove the hazardous halogenated compounds. In a further aspect, the tar and oil cracking step has the beneficial effect of creating more clean fuel gas.

In an aspect, the generated tars and oils are processed in the presence of an optional catalyst, such as for example zeolite. In an embodiment, the cracking step separates light and heavy oils, such as disclosed for example in U.S. Patent No. 9,631,153.

In an aspect, the methods may further include an optional cooling step for the gas. In some embodiments, the gas will be cooled due to further processing in a scrubbing stage. For example, a cooled conversion chamber may be in connection with a reactor according to the methods of the invention. In an aspect, a gas at a temperature from about 400°C-800°C is cooled to a temperature below about 100°C, or preferably below about 80°C. The gas may further thereafter be cooled to an ambient temperature, such as in an adjacent water scrubber to remove any excess water and/or steam from the gas. In other embodiments a cooling step is not required. For example in some embodiments, the piping of the system can be lined with heat resistant PFAS material, such as PVP lining.

In an aspect, the invention further includes a cleaning step for the further processing of the generated fuel gas. Such step may be referred to as a "wet scrubbing" step. In an aspect, the gas is introduced as a gas flow into a wet scrubber for purification. In an aspect, the gas scrubber(s) separate tars, oils and Char from the product gas flow. In a further aspect, the gas scrubber(s) can further cool the product gas, for example to a temperature below about 80°C. The scrubber(s) may further be employed for a final removal step for any toxic compounds in the fuel gas product.

In an aspect, the produced fuel gas / water vapor mixture enters the gas cleaning, *i.e.* scrubber system. In an aspect, each reactor line has its own first gas cleaning unit. The gas streams are combined after the first scrubber units and will enter the additional scrubbers afterwards.

In an aspect, the gas cleaning units include or consist of scrubbers, vessels, pumps, oil discharge units and heat exchangers. Water combined with additives, such as for example an alkalinity source (e.g. Ca(OH)₂ or other alkaline compounds whose fluoride salt is insoluble in water) or other source such as limestone for removal of sulfur, which are known to those skilled in the art of incineration technologies. Notably, the heating methods according to the invention are distinct from incineration as external heating is provided. For clarity, the methods of the invention do not employ incineration. Those skilled in the incineration arts understand scrubbing using water containing alkaline materials to remove acidic components are distinct methods. These are used in a closed loop system to clean condensates and contaminants out of the gas stream and to cool the gas down. The condensates contain olefins, aromatics and paraffins as solids and water. The standard system includes or consists of five gas cleaning systems. This amount can be reduced or increased depending on the feedstock specifications employed according to embodiments of the invention. The scrubbed components like tar will be the feedstock of the cracking reactors, the light oil fraction of aromatic oil and olefins will be separated from the solids/water and reprocessed in the gasification system and the water will be pre - cleaned and reused.

In an aspect, the invention will further include a recycling step for the recycling of any oils and tars created from the methods described herein. In an aspect, the recycling of the oils and tars involves cracking them and then reprocessing the shorter chain molecules into a main reactor to be converted into additional Clean Fuel Gas. In a beneficial aspect of the invention, such generated Clean Fuel Gas is suitable for use in maintaining operation of the processes of the invention at a point of use (*i.e.* facility employing the methods of the present invention).

In an aspect, the infeed screw conveyor has a conventional design, and the temperature of the co-product is the main parameter for its specification. The temperature of the co-product will be increased by indirect heating and controlled air supply before it enters the rotary calciner.

In an aspect, the rotary calciner has a basic design of an elongated drum with two bearings, an inner drum with flights and a central output screw conveyor. Input and output are symmetrical located. The drive is at the head of the rotary calciner. Input and output of the material is done via the shaft and thus gas proof to the atmosphere. A pipe register in two levels inside the drum will cool the process. The material can be transported by the inner flights into the output screw conveyor. The material can be continuously transported through the rotary calciner at a constant temperature and constant cooling. Moreover, carbon oxidizes to CO₂ in this process.

In an aspect, the output screw conveyor has a conventional design with a cooling jacket and connected to the storage vessel.

In an aspect, the exhaust gas cleaning module has a conventional particulate removal system and can be optionally equipped with a gas scrubber with solid removal. A fan can be added if necessary, before entering the stack.

In an aspect, the fuel gas is transported through the gas cleaning system by increasing the pressure, such as to about 100 mbar by ventilation systems. In an aspect, 100 mbar is the limit value for the system employed according to the invention.

In an aspect, the wastewater treatment includes or consists of a physical and biological treatment segment. The wastewater can be discharged after pre - treatment and cleaning.

In an aspect, the safety system transports the fuel gas to a flare in case of an emergency. In an aspect, all the pipelines have valves, which automatically open in case of a power failure. In a further aspect, the connecting pipes to the flare are equipped with burst discs, which will prevent excessive pressure in the reactors and the gas cleaning systems. In case of an emergency, this system will help to shut down the system in a safe manner.

### Generated Outputs of the Thermolysis Methods

In an aspect, the methods process and/or recycle PFAS material and/or PFAS-containing waste sources into fluoride salts, Char, and a Clean Fuel Gas source. Beneficially, the hydrocarbon materials from the waste inputs are converted to the Clean Fuel Gas while the metals and carbon-coke will be collected as "Char." As a further benefit, any oils and tars created are recycled into the secondary reactor and cracking reactor to be converted into additional fuel gas, such as may be employed to maintain operation of the processes of the invention at a point of use (*i.e*. facility employing the methods of the present invention).

### Fluoride Salts

The methods according to the invention employing the thermolysis methods beneficially provide fluorinated salts (*e.g*. CaF₂).

### Char

The methods according to the invention employing the thermolysis methods beneficially provide a processed Char comprising carbon and metals, or other fittings or materials of construction or design of the items containing the PFAS compounds (i.e. shoes, a rainproof jacket, carpet, etc.) In an embodiment at least 90% or greater, 95% or greater, or more of the Char will be carbon. The Char can further comprise carbon particulates/fine matter, and/or combinations of the same. In an aspect, the Char is a non-hazardous material. In an aspect, the Char is substantially-free or free of toxic chemicals. The Char must be cooled down before opening to air to prevent formation of hazardous dioxins and furans (such as for example to less than about 120°C).

In an aspect, the Char is substantially-free of (or free of) toxic chemicals and halogens and/or halogenated compounds.

In a further aspect and depending upon the waste source containing the PFAS material, at least 50% recovery of any metals are recovered from the Char through separation methods, preferably at least about 55%, preferably at least about 60%, preferably at least about 65%, preferably at least about 70%, preferably at least about 75%, preferably at least about 80%, preferably at least about 85%, preferably at least about 90%, or most preferably at least about 95%.

### Fuel Source

The methods according to the invention employing the thermolysis methods beneficially provide a clean fuel source. In an aspect, the fuel gas source is a clean, non-hazardous material. In an aspect, the fuel gas source is substantially-free of toxic chemicals. In an aspect, the fuel gas source is substantially-free of halogens and/or halogen compounds and other toxic chemicals. In an aspect, the fuel gas source is free of toxic chemicals. In an aspect, the fuel gas source is free of halogens and/or halogen compounds. In a further aspect, the fuel gas source is free of toxic chemicals, halogens and halogen compounds. In an aspect, the fuel source is substantially-free or free of polycyclic aromatic hydrocarbons (PAHs), halogenated dibenzodioxins, halogenated dibenzofurans, biphenyls, and/or pyrenes.

In an embodiment, the fuel gas generated is utilized for heating the reactor(s) for the thermolysis methods of the invention. In an aspect, the heat for the reactor(s) is supplied by about 10-50% of the generated fuel gas, about 10-40% of the generated fuel gas, or about 20-30% of the generated fuel gas.

In an embodiment, the fuel gas generated has a composition as set forth in the Tables in the examples.

In an aspect, the fuel gas is a superior product as a result of no air or external oxygen introduced into the reactors, such as is common in pyrolysis and/or partial oxidation systems.

In an embodiment of the invention the thermolysis of PFAS materials and/or PFAS-containing waste sources can provide at least about 100 BTU per pound (232.6 kJ/kg), at least about 500 BTU per pound (1163 kJ/kg), at least about 1,000 BTU per pound (2326 kJ/kg), or greater, producing a Clean Fuel Gas as an energy source. As one skilled in the art will ascertain based on the disclosure of the invention set forth herein, differences in PFAS material and waste sources will impact the BTUs per pound.

In an aspect, the generation of the fuel gas is suitable for various applications of use. In an embodiment, the generated fuel source can be used to generate electricity using engines or gas turbines to power a manufacturing plant and/or boilers as a replacement for natural gas and/or electricity. In another aspect, the fuel gas can be used for burners, or steam and electricity production and/or distribution. Many examples of such uses are well known to practitioners of the art.

### EXAMPLES

### EXAMPLE 1

Early studies of thermal degradation of poly(vinylfluoride) (PVF) was studied by Chatfield and reported in The Pyrolysis and Nonflaming Oxidative Degradation of Poly (vinylfluoride), Journal of Polymer Science: Polymer Chemistry Edition, Vol. 21, 1681-1691 (1983). Table 2 shows the summary of low-boiling volatiles from pyrolysis and nonflaming oxidative degradation of PVF at 450°C, where (a) shows Mol % based on all low-boiling volatile degradation products, and (b) shows Mol % excluding CO, CO₂, and H₂O.

**TABLE 2**

| Compound | Pyrolysis (mol%) | Nonflaming Oxidation | | Compound | Pyrolysis (mol%) | Nonflaming Oxidation | |
|---|---|---|---|---|---|---|---|
| | | (a) | (b) | | | (a) | (b) |
| CO | - | 32 | - | C₄H₅F | 0.06 | 0.008 | 0.03 |
| CO₂ | - | 0.6 | - | Cyclopentadiene | 0.05 | 0.007 | 0.03 |
| H₂O | - | 43 | - | Benzene | 4.5 | 0.43 | 1.7 |
| HF | 82 | 21 | 83 | Fluorobenzene | 0.3 | 0.03 | 0.1 |
| Methane | 5.2 | 1.7 | 6.8 | Toluene | 1.0 | 0.16 | 0.6 |
| Ethane | 0.6 | 0.06 | 0.2 | C₆H₄(CH₃)F | 0.04 | 0.01 | 0.04 |
| Ethylene | 0.8 | 0.2 | 0.8 | C₆H₅C₂H₅ or C₆H₄(CH₃)₂ | 0.9 | 0.1 | 0.4 |
| Acetylene | 0.03 | 0.003 | 0.01 | and Styrene | | | |
| Fluoroethylene | 0.07 | 0.06 | 0.2 | *n* - Propylbenzene | 0.2 | 0.04 | 0.2 |
| Propene | 0.5 | 0.09 | 0.4 | *iso* - Propylbenzene | 0.3 | 0.02 | 0.08 |
| C₃H₅F | 0.4 | 0.02 | 0.08 | C₆H₅-C₃H₅ | 0.2 | 0.02 | 0.08 |
| Butane | 0.06 | 0.02 | 0.08 | Indene | 0.3 | 0.02 | 0.08 |
| Butene | 1.1 | 0.04 | 0.2 | Napthalene | 0.8 | 0.07 | 0.3 |
| 1,2-Butadiene | 0.2 | 0.03 | 0.1 | Fluoronapthalene | 0.3 | 0.02 | 0.08 |
| 1,3-Butadiene | 0.7 | 0.01 | 0.04 | | | | |

As shown in Table 1 HF is the predominant compound from the thermal degradation of PVF. However various other degradation products are formed, including lower-molecular-weight halogen-containing compounds (e.g. partially-reacted fluorinated compounds) and various other residues. This demonstrates a need for further processing and/or improved processing to ensure that a waste source including PVF is able to completely break down to HF (and no other fluorinated compounds), along with also cracking and removing any tars and oils to provide outputs that only include Clean Fuel Gas and Char that are substantially-free of halogenated organic compounds and do not include tars and/or oils.

### EXAMPLE 2

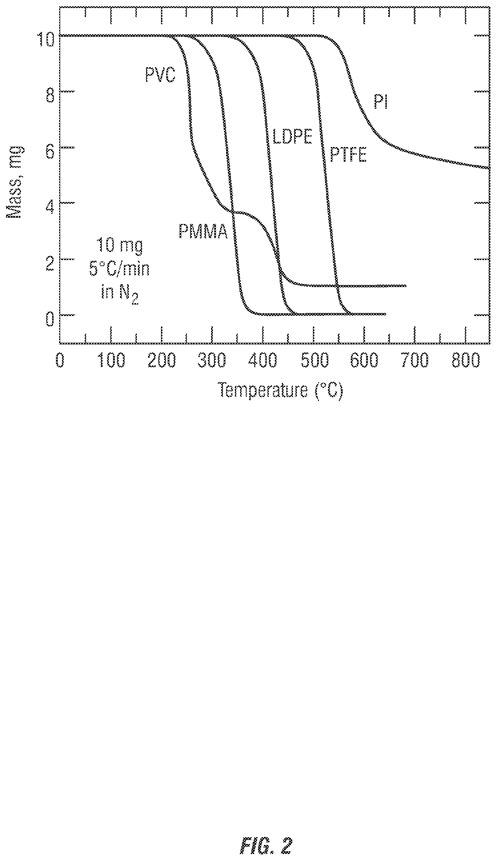

As shown in FIG. 2 using differential scanning calorimetry (DSC) the conditions of polymer degradation vary according to the bond strength of the halogen compound. The figure shows the effect of heating rate of 10 mg samples of the various materials heated at 5°C/minute in nitrogen. C-F has one of the strongest bonds in organic chemistry. Bond disassociation energy: C-F **115 ,** >C-Cl **83.7**, & >C-Br **46** Kcal/mole.

This is further illustrated in Table 3.

**TABLE 3**

| **Bond strengths and dissociation energies** | | |
|---|---|---|
| | | |
| **Bond** | **Enthalpy*** | **Bond dissociation energy 298C** |
| kcal/mole | | |
| H-H | 104.1 | 104 |
| F-F | 35.2 | 37 |
| H-F | 135.4 | 136 |
| H-Cl | 102.9 | |
| H-Br | 87.4 | |
| C-H | 98.6 | |
| C-C | 83.1 | 83 to 90 |
| C-F | 115.8 | 115 |
| C-Cl | 78.3 | 83.7 |
| C-Br | 65.9 | 46 |

C-F has the shortest bond distance of the C-X families. Further, increasing the number of fluorine atoms on a carbon also increases the stability and disassociation energy C-F₄>C-F₃>C-F₂ >C-F. All of these factors contribute to fluorinated organics being among the most chemically resistant and difficult to break the C-F bonds.

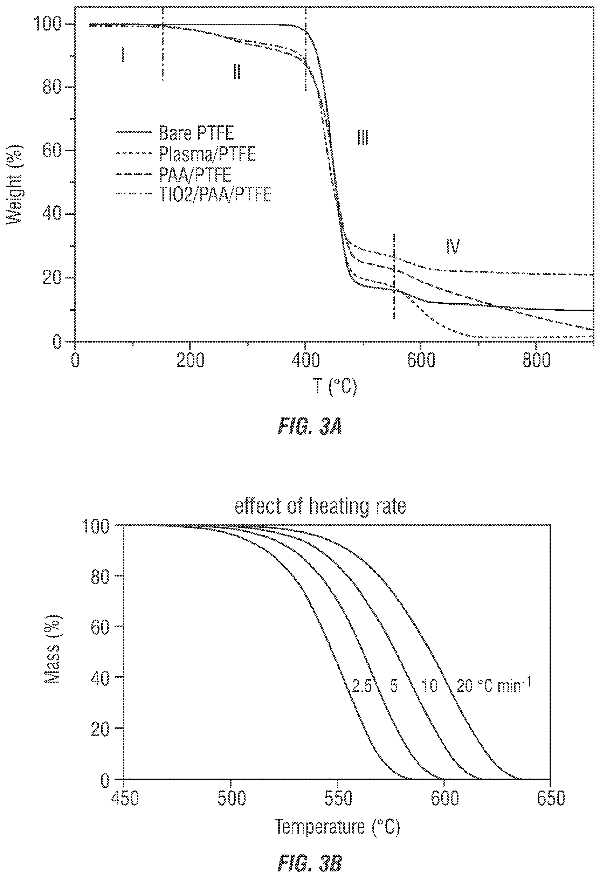

Additional TGA of PFAS-containing materials are shown in FIGS. 3A-3D. FIGS. 3A-3D show TGA data indicating that PTFE polymers decompose in a similar manner to other halogenated organics based on the symmetric curves of the TGA and additional inflections with the presence of fluorinated compounds. As a result of the C-F bond stability, the temperature to initiate the decomposition is higher and likely the resonance or dwell time will be longer. In some embodiments, the PFAS-containing materials may be processed using additional dwell time in the reactors (e.g. through secondary reactors to ensure complete de-fluorination). Beneficially, the methods described herein are designed to optimize the thermal decomposition process and convert the HF acid gas to an ionic salt (CaF₂) when the gas is processed through the scrubber system. This will provide safe handling of HF, which is a very hazardous gas and requires special handling.

FIG. 3A shows TGA thermograms of bare PTFE and modified PTFE membranes (including coating with TiO₂). I-IV in the figure refers to four temperature ranges (i.e. regions) under which the thermal stability was assessed, with the addition of the TiO₂ coating increasing thermal stability. Region III (410-550°C) and Region IV (up to 700°C) is where the main decomposition of PTFE membrane and plasma-treated PTFE membrane took place. There was decomposition of the PAA/PTFE and TiO₂/PAA/PTFE in all regions, including Region I (<150°C) attributed to loss of absorbed water and Region II (up to 200-400°C) attributed to decomposition of PAA. Additional description of the testing methodology and assessment is available in Appl. Petrochem. Res. (2016) 6:225-233.

FIG. 3B shows the effect of heating rate of 10 mg samples of PTFE heated at 2.5, 5, 10 and 20°C/minute in nitrogen.

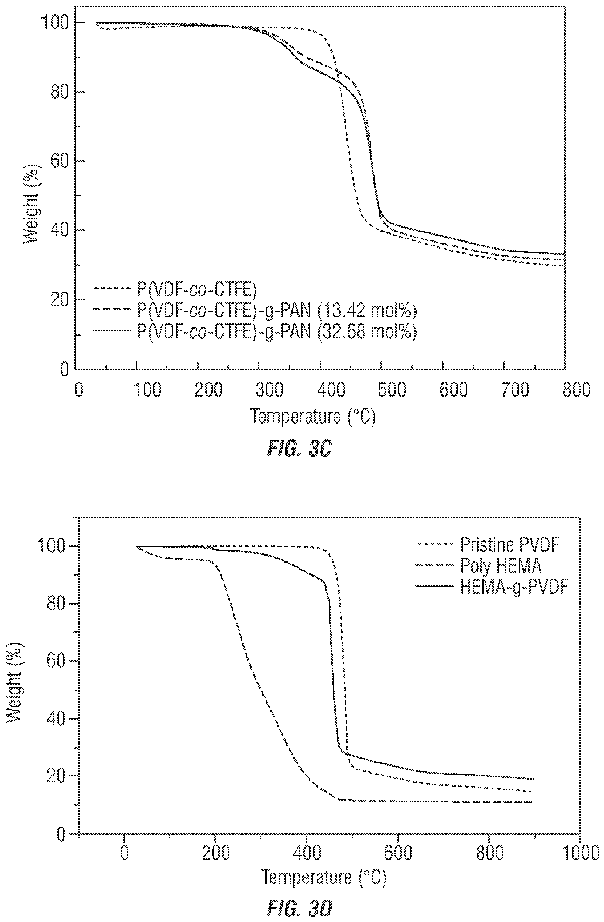

FIG. 3C shows copolymers Poly(vinylidene fluoride)-copolymer chlorotrifluoroethylene (P(VDF-co-CTFE), and the P(VDF-co-CTFE) with g-polyacrylonitrile (P(VDF-co-CTFE)-g-PAN) at varying mol% evaluated to show the effect of heating.

FIG. 3D shows Poly(vinylidene fluoride) (PVDF), poly(2-hydroxyethyl methacrylate) (poly HEMA), and Poly(vinylidene fluoride)-graft-poly(2-hydroxyethyl methacrylate) (HEMA-g-PVDF which is a novel material for high energy density capacitors) evaluated to show the effect of heating.

### EXAMPLE 3

Assessment of various PFAS-containing waste sources will be analyzed, including solar panels containing PVP and PVDP, to review and analyze the components of these waste sources that become inputs for processing. Table 4 lists component pieces of a solar panel subjected to processing by the Thermolysis systems showing how the material can be processed:

**TABLE 4**

| **Component** | **Processing** |
|---|---|
| Solar-grade glass | Recycle - |
| Aluminum frame | Recycle |
| Silicon | Recover, recycle, reuse |
| Metals: e.g. Cu, Ag | Recover, reuse |
| Polymers including Tedlar | Safely convert to energy and safely remove all halogens |

### EXAMPLE 4

### Systems and apparatus for processing PFAS-containing solar panel waste sources.

Apparatus and processing system has been evaluated to assess the product features and material balances as disclosed pursuant to the embodiments of the invention. Materials of construction have been selected to be halogen tolerant, such as steel or liners inside piping of the scrubbers. Testing will be completed to demonstrate the technical capabilities of a plant with a continuous feed of the shredded waste source to yield specific product and operating parameter for further evaluation. The methods according to the invention were evaluated to confirm gas output having a suitable composition with high methane, hydrogen and carbon monoxide content for further usage, and toxic components neutralized in the gas scrubbers with sodium hydroxide. The methods according to the invention will be evaluated to confirm complete and safe removal of fluorine and other toxic compounds in the Char as non-detectable. The methods according to the invention will be evaluated to confirm complete removal of fluorine, VOCs and other toxic components, along with the measurement of any potentially hazardous components and VCOs to assess suitability of the processes for use in factories. The methods according to the invention will be evaluated to assess ability to collect silicon and metal particles from the Char through mechanical separation.

**Parameters of the test operation.** Feedstock will be received and inspected. After any removal of the metal frames and/or glass panels, the feedstock will be shredded to approximately less than 2 inches. The reactor substantially as depicted in Figure 1 will be cleaned before the test. Process software and sensors will be adjusted to record the operating conditions. The material handling and infeed conditions will be adjusted before the test. Technical adjustments for this specific feedstock will be implemented as outlined below.

**Continuous processing.** A continuous plant operation will be conducted after heating the system up with controlled feedstock input and product discharge. The operating parameters will be adjusted to the requirements of the feedstock. The resulting materials and media will be sampled and documented. Gas samples, a feedstock sample and a Char sample will be obtained for further analysis. The analysis of the samples will be carried out by a certified independent laboratory.

Standard operating conditions of the plant included the following preparation of the plant for the operation: Start-up of the plant: 6:30 am; Feedstock Input: from 11:00 am; Sampling between 13:00 and 15:30 pm; Completion of plant operation: until 18:00 pm; Discharge of products and media, Recording of the yielded products for the mass balance.

**General conditions.** The feedstock will be shredded and was fed according to the test protocol. The start-up process included the heating of the reactors and the adjustments of the gas scrubbing units and adjacent plant components. The operating conditions will be adjusted to the test plant as outlined below.

**Plant conditions.** The plant operation during the test will use the standard configuration of the system and specific adjustments for this feedstock.

**Special conditions of the test operation.** The selected basic operating parameters will be continuously monitored and needed only miniscule adjustments. The Infeed volume of the feedstock will be increased during the second phase of the test. The feedstock input will be continuous - in selected intervals.

**Summary of apparatus and process set-up.** The feedstock reacts quickly in the main reactor at these temperature conditions and gasifies rapidly. This gasification profile will be monitored by the pressure increase shortly after the feedstock is fed into the system. The observed pressure increase is not critical and can be equalized by a more constant feedstock input for a commercial size unit. Beneficially, the gasification and reaction speed of the tested feedstock described herein enables a high throughput volume. The generated gas is piped from the reactor into the gas scrubbing units, which remove the condensates from the gas stream. The condensates are then collected in the scrubbers and their viscosity is suitable for reinjection into the process as a fuel source. Residual tars are not left over in the scrubbers.

Various operational parameters will be adjusted including: throughput volumes for the Infeed screw conveyors; adjustments of the steam injections to balance out the reactions in the reactor; reactor temperatures; volume of feedstock input; and residence time dependent on Char removal. With these adjustments and the set-up described a stable plant operation will be achieved.

The plant operation volumes will be measured and recorded to assess input total (kg) and average output (kg/h).

### EXAMPLE 5

Exemplary processing of PFAS containing waste sources are depicted in FIGS. 5A-5B. FIG. 5A shows exemplary processing of Tedlar (polyvinyl fluoride) containing waste source. The waste source is added to the reactor(s) of the system and shown in an embodiment where polyethylene is added to the reactor(s) to increase the total hydrogen content to aid in driving the formation of HF in the reactor(s). Polyethylene is an exemplary source of hydrogen to drive the reaction to form HF gas. In the reactor in a first step the Tedlar containing waste source undergoes a depolymerization and a cracking reaction of hydrocarbons to cleave C-C bonds and C-H bonds in the PFAS materials to provide an excess of hydrogen to cleave C-F bonds and destroy and/or remove toxic compounds present in the PFAS materials. Not depicted in this figure is the removal of the Char from the 1^{st} reactor step and the oil/water separators and the tar/oil crackers of the methods. Once the HF case is formed it is captured and processed through the gas scrubber(s) to neutralize the HF gas with a mineral basic compound. In a third step the water-soluble mineral (e.g. calcium compound) precipitates CaF₂ from the system. This final step removes the fluorine halogens in a basic aqueous scrubber in the form of a non-toxic mineralized salt, namely a fluoride salt (e.g. CaF₂).

FIG. 5B shows exemplary processing of PFOS (perfluorooctanesulfonic acid) containing waste source, such as used in AFFF foams. The waste source is added to the reactor(s) of the system and shown in an embodiment where sawdust or other plastics can be added to the reactor(s) to increase the total hydrogen content. In the reactor in a first step the PFOS containing waste source undergoes a depolymerization and a cracking reaction of hydrocarbons to cleave C-C bonds and C-H bonds in the PFAS materials to provide an excess of hydrogen to cleave C-F bonds and destroy and/or remove toxic compounds present in the PFOS materials. Again, not depicted in this figure is the removal of the Char from the 1^{st} reactor step and the oil/water separators and the tar/oil crackers of the methods. Once the HF case is formed it is captured and processed through the gas scrubber(s) to neutralize the HF gas with a mineral basic compound. In a third step the water-soluble mineral (e.g. calcium compound) precipitates CaF₂ from the system.

### EXAMPLE 6

Benchtop testing for Teflon processing. A sample of 0.52 g of Teflon and 0.52 g of polyethylene (PE) were put into a 6" long 316 stainless steel tube and enclosed by two fine stainless steel wool plugs inside a 4" tube furnace. The plugs constrained the Teflon and PE to be in the center of the furnace. This testing that was not completed in the thermolysis system is an example to demonstrate the methods for safely processing and/or recycling PFAS materials and/or PFAS-containing waste sources under similar processing conditions on a small scale. The use of the Thermolyzer system will provide significantly enhanced residence time of the Tedlar or Teflon (or other PFAS materials) and will provide more hydrogen atoms to complete the reactions to HF.

In this evaluation the 1:1 mass ratio assured that there was a hydrogen/fluorine ratio of about 3:1. The excess of hydrogen coupled with the high HF bond strength promotes scission of the fluorine bonds in the Teflon and formation of HF to precipitate as CaF₂ in the bubblers. The tube was flushed with He to remove all air. The furnace was heated at about a 90°C/min heating rate. The high heating rate was chosen to maximize the likelihood that sufficient hydrogen atoms from the decomposition of PE were present to enable scission of the fluorine atoms from the Teflon. After 6 minutes of heating, the temperature was stabilized at 550°C. The furnace gradually increased to 574°C. When a temperature of 450°C was reached, the He flow was shut off and periodic gas samples were taken as the gas bubbled thru the Ca acetate solution. The bubblers each held 30 ml of water containing 3.14 g of Ca acetate. The solution had been degassed. Then the furnace was turned off. A yellow waxy material was observed in the exit tube A cloudiness in the first bubbler was observed, indicating that HF had formed in the reaction chamber. When cool, the tube was weighed. Starting weight was 116.76 g and the weight after heating was 115.92 g for a weight loss of 0.84 g. The waxy material was collected and weighed 0.16 g. The stoppers on each end of the tube were blackened and showed surface damage. The cloudy Ca acetate solution was filtered onto paper. After drying, the mass of the cloudy material was 0.02 g. The steel wool plugs removed easily and were a bluish color on the side facing the center of the tube.

The next day the bubblers were washed thoroughly and refilled with 30 ml each of a solution containing 3.14 g of Ca acetate in each bubbler. A new stainless steel tube was loaded with 0.54 g of Teflon and 0.62 g of PE. Two steel wool plugs constrained the samples to be in the center of the tube. Two end stoppers and an exit tube placed in one. That side connects to the bubblers. A flow of He was passed thru the tube to remove all air. The tube weighed 117.41 g at the start and 116.95 g when the test was over for a weight loss of 0.46 g. The furnace was heated at 75°C/min. The temperature stabilized at 500°C and then gradually increased to 550°C. At 400°C the flow of He was stopped. Bubbling continued and gas samples were taken. Samples were taken by briefly opening the gas collection tank valve. Care had to be taken not to evacuate the gas line or the Ca acetate solution would be sucked back into the hot reaction tube. The gas sampling stopped when the bubbling stopped as best determined. A very slight cloudiness appeared in the first bubbler, but it was too dilute to attempt to recover. The temperature in this test did not rise as high as the test on the first day, explaining why a smaller amount of precipitate formed in the Ca acetate solution.

On the second day of testing increased bubbling at a lower temperature was observed and the heat was turned off at 400°C instead of 450°C. This was done to capture more syngas for analysis and was not critical to the results of the experiment.

The gas bottles and chain of custody documents were packaged and shipped overnight for analysis by Eurofins. The gas sample from the Teflon processing was too small to interpret as only methane and CO₂ were measured. This is a small scale showing of defluorination of the waste source even with the small gas sample evaluated.

### EXAMPLE 7

Analysis of the Char source will be conducted to show that the methods of the invention maintain the form of the metals and other elements, without introducing any contaminants and/or other hazardous materials, including PFAS byproducts. This beneficially, preserves the value of the metals and other elements. The Fresenius Institute will validate the destruction of and complete defluorination of the waste source using a mass and energy balance of the Char.

### EXAMPLE 8

Additional analysis of the Clean Fuel Gas processed according to the methods described herein will be conducted to show that the methods of the invention generate gas that is suitable for use as a clean energy source, without introducing any contaminants and/or other hazardous materials, including PFAS byproducts. Measurement of at least the following components as shown in Table 5 will be made to demonstrate complete defluorination of the waste source (validated by the Fresenius Institute) and expected ranges are shown:

**TABLE 5**

| **Main Components** | **[Vol-%]** |
|---|---|
| H₂ | 12-20 |
| O₂ | 1-2 |
| N₂ | 4-8 |
| CH₄ | 18-25 |
| CO₂ | 15-21 |
| CO | 9-14 |
| Ethane | 1-6 |
| Ethene | 6-14 |
| Propane | 1-5 |
| Propene | 4-8 |
| i-Butane | 0.1-.05 |
| n-Butane | 0.1-0.5 |

## Claims

1. A method for safely processing and/or recycling PFAS (per- and polyfluoroalkyl substances) materials and/or PFAS-containing waste sources comprising:
inputting a PFAS material and/or PFAS-containing waste source into a thermolysis system comprising at least one reactor for a multicomponent and multistep, energy-assisted, chemical reaction to defluorinate PFAS compounds in the PFAS material and/or PFAS-containing waste source;
undergoing a depolymerization and a cracking reaction of hydrocarbons in the waste source to cleave C-C bonds and C-H bonds in the PFAS materials and/or PFAS-containing waste sources to provide an excess of hydrogen to cleave C-F bonds and destroy and/or remove toxic compounds present in the PFAS materials and/or PFAS-containing waste sources; and
forming HF gas and processing the HF gas through at least one gas/aqueous scrubber to form a Clean Fuel Gas, wherein the HF gas is neutralized to form fluoride salts; and
generating the fluoride salt, Clean Fuel Gas and Char source that are substantially-free of PFAS byproducts and halogenated organic compounds and do not include tars and/or oils.

2. The method of claim 1, wherein the PFAS material has less than about 10% fluorine content when inputted into the thermolysis system.

3. The method of claim 1, wherein the PFAS-containing waste source is a plastic, foam, liquid crystals, chemical crop protectant, lubricant, stain-resistant product, waterproof product, other surface repellant products for fabrics, carpet, leather, paints, cleaning products, food packaging, solar panels, and/or nonstick product.

4. The method of claim 1, further comprising a first step of separating metal and/or other recoverable components from the waste source before the inputting into the thermolysis system.

5. The method of claim 1, further comprising an initial step of shredding the waste source to provide a substantially uniform waste source;
wherein, optionally, the waste source has an average diameter of less than about 2 inches before it is inputted into the thermolysis system.

6. The method of any one of claims 1-5, further comprising adding a hydrogen source into the reactor where the depolymerization and a cracking reaction occurs to drive the reaction;
wherein, optionally, the hydrogen source is an olefin polymer, or an organic source.

7. The method of any one of claims 1-5, wherein the thermolysis system comprises at least one reactor with a process temperature of from about 400°C-800°C, preferably from about 450°C-650°C, and more preferably about 600°C-650°C for the PFAS material and/or PFAS-containing waste source to undergo at least partial gasification.

8. The method of any one of claims 1-5, wherein the thermolysis system provide indirect heat in a system that is free of oxygen; or the thermolysis system has a pressure range from about 10 to about 100 millbar.

9. The method of any one of claims 1-5, wherein the steps of undergoing depolymerization and cracking reaction of hydrocarbons in the waste source further cleaves additional hydrogen-halogen bonds; or
wherein the toxic compounds destroyed and/or removed comprise PFAS byproducts, polycyclic aromatic hydrocarbons (PAHs), halogenated dibenzodioxins, halogenated dibenzofurans, biphenyls, and/or pyrenes, or other halogenated organics, and wherein the fluorinated salts, Clean Fuel Gas and Char source generated contain less than about 10 ppb of the halogenated organic compounds.

10. The method of any one of claims 1-5, wherein the HF gas is neutralized with a mineral basic component.

11. The method of any one of claims 1-5, wherein the formed fluoride salts can be used for synthesis of other fluorinated compounds; or
wherein the Clean Fuel Gas source further comprise the separation of oil-soluble substances from a gas/vapor mixture following the thermolytic conversion of hydrocarbons in the PFAS material and/or waste source.

12. The method of any one of claims 1-5, wherein the methods do not generate any toxic halogenated organic compounds and/or PFAS byproducts in the process of converting the PFAS material and/or waste sources to the Clean Fuel Gas and Char source;
wherein, optionally, the at least 99% of the PFAS compounds in the PFAS material and/or PFAS-containing waste source is destroyed;
wherein, further optionally, the at least 99% destroyed PFAS compounds includes any PFAS byproducts formed during the methods.

13. The method of claim 1, wherein the Char and the fuel gas source are free of halogenated organic compounds, and wherein at least a portion of the fuel gas source generated is provided back to the method for converting additional PFAS material and/or waste sources to provide an energy source for such method and/or provided as a fuel source for an alternative application of use;
wherein, optionally, the fuel gas source provides indirect heat into the thermolysis system.

14. The method of any one of claims 1-5, further comprising a step of precipitating the fluoride salts from the gas/aqueous scrubber.

15. The method of any one of claims 1-5, comprising adding a water-soluble calcium compound to precipitate CaF₂.

## Patentansprüche

1. Verfahren zum sicheren Verarbeiten und/oder Recyceln von PFAS (per- und polyfluoralkylierte Substanzen)-Materialien und/oder PFAS-haltigen Abfallquellen, umfassend:
Eingeben eines PFAS-Materials und/oder einer PFAS-haltigen Abfallquelle in ein Thermolysesystem, das mindestens einen Reaktor für eine mehrkomponentige und mehrstufige, energieunterstützte, chemische Reaktion umfasst, um PFAS-Verbindungen in dem PFAS-Material und/oder in der PFAS-haltigen Abfallquelle zu defluorieren;
Durchlaufen einer Depolymerisation und einer Crackreaktion von Kohlenwasserstoffen in der Abfallquelle, um C-C-Bindungen und C-H-Bindungen in den PFAS-Materialien und/oder in den PFAS-haltigen Abfallquellen zu spalten, um einen Überschuss an Wasserstoff bereitzustellen, um C-F-Bindungen zu spalten und toxische Verbindungen zu zerstören und/oder zu entfernen, die in den PFAS-Materialien und/oder in den PFAS-haltigen Abfallquellen vorhanden sind; und
Bilden von HF-Gas und Verarbeiten des HF-Gases durch mindestens einen Gas-/wässrigen Wäscher, um ein sauberes Brenngas zu bilden, wobei das HF-Gas neutralisiert wird, um Fluoridsalze zu bilden; und
Erzeugen des Fluoridsalzes, des sauberen Brenngases und der Kohlequelle, die im Wesentlichen frei von PFAS-Nebenprodukten und halogenierten organischen Verbindungen sind und keine Teere und/oder Öle beinhalten.

2. Verfahren nach Anspruch 1, wobei das PFAS-Material einen Fluorgehalt von weniger als etwa 10 % aufweist, wenn es in das Thermolysesystem eingegeben wird.

3. Verfahren nach Anspruch 1, wobei die PFAS-haltige Abfallquelle ein Kunststoff, ein Schaumstoff, Flüssigkristalle, ein chemisches Pflanzenschutzmittel, ein Schmiermittel, ein schmutzabweisendes Produkt, ein wasserdichtes Produkt, andere oberflächenabweisende Produkte für Stoffe, ein Teppich, ein Leder, Farben, Reinigungsprodukte, Lebensmittelverpackungen, Solarpaneele und/oder ein Antihaftprodukt ist.

4. Verfahren nach Anspruch 1, ferner umfassend einen ersten Schritt des Trennens von Metall und/oder anderen rückgewinnbaren Komponenten von der Abfallquelle vor dem Eingeben in das Thermolysesystem.

5. Verfahren nach Anspruch 1, ferner umfassend einen anfänglichen Schritt des Zerkleinerns der Abfallquelle, um eine im Wesentlichen einheitliche Abfallquelle bereitzustellen; wobei optional die Abfallquelle einen durchschnittlichen Durchmesser von weniger als etwa 2 Zoll aufweist, bevor sie in das Thermolysesystem eingegeben wird.

6. Verfahren nach einem der Ansprüche 1-5, ferner umfassend das Hinzufügen einer Wasserstoffquelle in den Reaktor, in dem die Depolymerisation und eine Crackreaktion auftreten, um die Reaktion anzutreiben;
wobei optional die Wasserstoffquelle ein Olefinpolymer oder eine organische Quelle ist.

7. Verfahren nach einem der Ansprüche 1-5, wobei das Thermolysesystem mindestens einen Reaktor mit einer Prozesstemperatur von etwa 400 °C-800 °C, vorzugsweise von etwa 450 °C-650 °C, und bevorzugter etwa 600 °C-650 °C für das PFAS-Material und/oder die PFAS-haltige Abfallquelle umfasst, um eine zumindest teilweise Vergasung zu durchlaufen.

8. Verfahren nach einem der Ansprüche 1-5, wobei das Thermolysesystem indirekte Wärme in einem System bereitstellt, das frei von Sauerstoff ist; oder das Thermolysesystem einen Druckbereich von etwa 10 bis etwa 100 Millibar aufweist.

9. Verfahren nach einem der Ansprüche 1-5, wobei die Schritte des Durchlaufens der Depolymerisation und der Crackreaktion von Kohlenwasserstoffen in der Abfallquelle ferner zusätzliche Wasserstoff-Halogen-Bindungen spalten; oder
wobei die zerstörten und/oder entfernten toxischen Verbindungen PFAS-Nebenprodukte, polyzyklische aromatische Kohlenwasserstoffe (PAHs), halogenierte Dibenzodioxine, halogenierte Dibenzofurane, Biphenyle und/oder Pyrene oder andere halogenierte organische Verbindungen umfassen, und wobei die erzeugten fluorierten Salze, das erzeugte saubere Brenngas und die erzeugte Kohlequelle weniger als etwa 10 ppb der halogenierten organischen Verbindungen enthalten.

10. Verfahren nach einem der Ansprüche 1-5, wobei das HF-Gas mit einer mineralischen basischen Komponente neutralisiert wird.

11. Verfahren nach einem der Ansprüche 1-5, wobei die gebildeten Fluoridsalze für die Synthese anderer fluorierter Verbindungen verwendet werden können; oder
wobei die Quelle für sauberes Brenngas ferner die Trennung öllöslicher Substanzen von einem Gas-/Dampfgemisch im Anschluss an die thermolytische Umwandlung von Kohlenwasserstoffen in dem PFAS-Material und/oder in der Abfallquelle umfasst.

12. Verfahren nach einem der Ansprüche 1-5, wobei die Verfahren keine toxischen halogenierten organischen Verbindungen und/oder PFAS-Nebenprodukte im Prozess des Umwandelns des PFAS-Materials und/oder der Abfallquellen in das saubere Brenngas und die Kohlequelle erzeugen;
wobei optional die mindestens 99 % der PFAS-Verbindungen in dem PFAS-Material und/oder in der PFAS-haltigen Abfallquelle zerstört werden;
wobei weiter optional die mindestens 99 % zerstörten PFAS-Verbindungen jegliche PFAS-Nebenprodukte beinhalten, die während der Verfahren gebildet werden.

13. Verfahren nach Anspruch 1, wobei die Kohle und die Brenngasquelle frei von halogenierten organischen Verbindungen sind, und wobei mindestens ein Teil der erzeugten Brenngasquelle an das Verfahren zum Umwandeln von zusätzlichem PFAS-Material und/oder zusätzlichen Abfallquellen zurückgegeben wird, um eine Energiequelle für ein solches Verfahren bereitzustellen, und/oder als eine Brennstoffquelle für eine alternative Verwendungsanwendung bereitgestellt wird;
wobei optional die Brenngasquelle dem Thermolysesystem indirekte Wärme bereitstellt.

14. Verfahren nach einem der Ansprüche 1-5, ferner umfassend einen Schritt des Ausfällens der Fluoridsalze aus dem Gas-/wässrigen Wäscher.

15. Verfahren nach einem der Ansprüche 1-5, umfassend das Hinzufügen einer wasserlöslichen Calciumverbindung, um CaF₂ auszufällen.

## Revendications

1. Procédé de traitement et/ou de recyclage sûr des matériaux PFAS (substances perfluoroalkylées- et polyfluoroalkylées) et/ou des sources de déchets contenant des PFAS, comprenant :
l'introduction d'un matériau PFAS et/ou d'une source de déchets contenant des PFAS dans un système de thermolyse comprenant au moins un réacteur pour une réaction chimique multicomposante et multiétape, assistée par l'énergie, afin de défluorer les composés PFAS dans le matériau PFAS et/ou la source de déchets contenant des PFAS ;
le fait de subir une dépolymérisation et une réaction de craquage d'hydrocarbures présents dans la source de déchets afin de cliver les liaisons C-C et les liaisons C-H dans les matériaux PFAS et/ou les sources de déchets contenant des PFAS afin de fournir un excès d'hydrogène pour cliver les liaisons C-F et détruire et/ou éliminer les composés toxiques présents dans les matériaux PFAS et/ou les sources de déchets contenant des PFAS ; et
la formation de gaz HF et le traitement du gaz HF à travers au moins un laveur de gaz/aqueux pour former un gaz combustible propre, dans lequel le gaz HF est neutralisé pour former des sels de fluorure ; et
la génération du sel de fluorure, du gaz combustible propre et de la source de charbon qui sont sensiblement exempts de sous-produits PFAS et de composés organiques halogénés et qui ne contiennent ni goudrons ni huiles.

2. Procédé selon la revendication 1, dans lequel le matériau PFAS a une teneur en fluor inférieure à environ 10 % lorsqu'il est introduit dans le système de thermolyse.

3. Procédé selon la revendication 1, dans lequel la source de déchets contenant des PFAS est un plastique, une mousse, des cristaux liquides, un produit phytosanitaire chimique, un lubrifiant, un produit antitache, un produit imperméable, d'autres produits hydrofuges de surface pour les tissus, les tapis, le cuir, les peintures, les produits de nettoyage, les emballages alimentaires, les panneaux solaires et/ou les produits antiadhésifs.

4. Procédé selon la revendication 1, comprenant en outre une première étape de séparation du métal et/ou d'autres composants récupérables de la source de déchets avant leur introduction dans le système de thermolyse.

5. Procédé selon la revendication 1, comprenant en outre une étape initiale de broyage de la source de déchets afin de fournir une source de déchets sensiblement uniforme ;
dans lequel, éventuellement, la source de déchets a un diamètre moyen inférieur à environ 2 pouces avant d'être introduite dans le système de thermolyse.

6. Procédé selon l'une quelconque des revendications 1 à 5, comprenant en outre l'ajout d'une source d'hydrogène dans le réacteur où se produisent la dépolymérisation et une réaction de craquage pour entraîner la réaction ;
dans lequel, éventuellement, la source d'hydrogène est un polymère d'oléfine ou une source organique.

7. Procédé selon l'une quelconque des revendications 1 à 5, dans lequel le système de thermolyse comprend au moins un réacteur avec une température de traitement d'environ 400 °C à 800 °C, de préférence d'environ 450 °C à 650 °C, et de manière davantage préférée d'environ 600 °C à 650 °C pour que le matériau PFAS et/ou la source de déchets contenant des PFAS subissent au moins une gazéification partielle.

8. Procédé selon l'une quelconque des revendications 1 à 5, dans lequel le système de thermolyse fournit de la chaleur indirecte dans un système qui est exempt d'oxygène ; ou le système de thermolyse a une plage de pression de 10 à 100 millibars.

9. Procédé selon l'une quelconque des revendications 1 à 5, dans lequel les étapes consistant à subir une dépolymérisation et une réaction de craquage d'hydrocarbures dans la source de déchets clivent en outre des liaisons hydrogène-halogène supplémentaires ; ou
dans lequel les composés toxiques détruits et/ou éliminés comprennent des sous-produits PFAS, des hydrocarbures aromatiques polycycliques (HAP), des dibenzodioxines halogénées, des dibenzofuranes halogénés, des biphényles et/ou des pyrènes, ou d'autres composés organiques halogénés, et dans lequel les sels fluorés, le gaz combustible propre et la source de charbon générés contiennent moins d'environ 10 ppb des composés organiques halogénés.

10. Procédé selon l'une quelconque des revendications 1 à 5, dans lequel le gaz HF est neutralisé avec un composant basique minéral.

11. Procédé selon l'une quelconque des revendications 1 à 5, dans lequel les sels de fluorure formés peuvent être utilisés pour la synthèse d'autres composés fluorés ; ou
dans lequel la source de gaz combustible propre comprend en outre la séparation de substances solubles dans l'huile d'un mélange gaz/vapeur suivant la conversion thermolytique d'hydrocarbures dans le matériau PFAS et/ou la source de déchets.

12. Procédé selon l'une quelconque des revendications 1 à 5, dans lequel les procédés ne génèrent aucun composé organique halogéné toxique et/ou sous-produit PFAS dans le processus de conversion du matériau PFAS et/ou des sources de déchets en gaz combustible propre et en source de charbon ;
dans lequel, éventuellement, au moins 99 % des composés PFAS dans le matériau PFAS et/ou la source de déchets contenant des PFAS sont détruits ;
dans lequel, éventuellement en outre, les au moins 99 % des composés PFAS détruits comportent tous les sous-produits PFAS formés au cours des procédés.

13. Procédé selon la revendication 1, dans lequel le produit de carbonisation et la source de gaz combustible sont exempts de composés organiques halogénés, et dans lequel au moins une partie de la source de gaz combustible générée est réinjectée dans le procédé de conversion de matériaux PFAS et/ou de sources de déchets supplémentaires afin de fournir une source d'énergie pour ce procédé et/ou fournie comme source de combustible pour une autre application d'utilisation ;
dans lequel, éventuellement, la source de gaz combustible fournit une chaleur indirecte au système de thermolyse.

14. Procédé selon l'une quelconque des revendications 1 à 5, comprenant en outre une étape de précipitation des sels de fluorure à partir du laveur de gaz/aqueux.

15. Procédé selon l'une quelconque des revendications 1 à 5, comprenant l'ajout d'un composé de calcium hydrosoluble pour précipiter CaF₂.
